(19) Europäisches Patentamt
European Patent Office
Office européen des brevets

(11) **EP 2 799 460 B1**

(12) **EUROPEAN PATENT SPECIFICATION**

(45) Date of publication and mention of the grant of the patent:
**13.04.2016 Bulletin 2016/15**

(21) Application number: **12862453.3**

(22) Date of filing: **25.12.2012**

(51) Int Cl.:
***C08G 59/40** (2006.01)* ***C08G 59/28** (2006.01)*
***C08G 59/58** (2006.01)* ***C08J 5/24** (2006.01)*
***C08L 63/00** (2006.01)*

(86) International application number:
**PCT/JP2012/083459**

(87) International publication number:
**WO 2013/099862 (04.07.2013 Gazette 2013/27)**

(54) **EPOXY RESIN COMPOSITION FOR FIBER-REINFORCED COMPOSITE MATERIALS, PREPREG, AND FIBER-REINFORCED COMPOSITE MATERIAL**

EPOXIDHARZZUSAMMENSETZUNG FÜR EIN FASERVERSTÄRKTES VERBUNDMATERIAL, PREPREG UND FASERVERSTÄRKTES VERBUNDMATERIAL

COMPOSITION DE RÉSINE ÉPOXY DESTINÉE À DES MATÉRIAUX COMPOSITES RENFORCÉS PAR DES FIBRES, PRÉIMPRÉGNÉ ET MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 JP 2011285053**

(43) Date of publication of application:
**05.11.2014 Bulletin 2014/45**

(73) Proprietor: **Toray Industries, Inc.**
**Tokyo 103-8666 (JP)**

(72) Inventors:
- **NAGANO, Maki**
**Nagoya-shi**
**Aichi 455-8502 (JP)**
- **SHIMIZU, Yuko**
**Nagoya-shi**
**Aichi 455-8502 (JP)**
- **TOMIOKA, Nobuyuki**
**Nagoya-shi**
**Aichi 455-8502 (JP)**

(74) Representative: **Webster, Jeremy Mark et al**
**Mewburn Ellis LLP**
**City Tower**
**40 Basinghall Street**
**London EC2V 5DE (GB)**

(56) References cited:
**WO-A1-2010/035859** **WO-A1-2010/109929**
**JP-A- 2002 003 699**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 799 460 B1

## Description

Technical Field

The present invention relates to fiber-reinforced composite material suitable aerospace uses, prepreg for the production thereof, and epoxy resin composition for fiber-reinforced composite material preferred as matrix resin thereof (hereinafter, occasionally referred simply to epoxy resin composition).

Background Art

High in specific strength and specific rigidity, carbon fiber-reinforced composite materials are useful and have been used in a wide variety of applications including aircraft structure members, windmill blades, automobiles' exterior plates, and computer parts such as IC trays and notebook computer housing, and demands for them have been increasing every year.

A carbon fiber-reinforced composite material has an heterogeneous structure produced by molding a piece of prepreg consisting essentially of carbon fiber, i.e., reinforcement fiber, and a matrix resin, and accordingly, such a structure has large differences in physical properties between the alignment direction of the reinforcement fiber and other directions. For instance, it is known that the interlaminar toughness, which represents the resistance to interlaminar fracture of the reinforcement fiber layers, cannot be improved drastically by simply increasing the strength of the reinforcement fiber. In particular, carbon fiber-reinforced composite materials containing a thermosetting resin as matrix resin are generally liable to be fractured easily by a stress caused in a direction other than the alignment direction of the reinforcement fiber, reflecting the low toughness of the matrix resin. In this respect, various techniques have been proposed aiming to provide composite materials that have improved physical properties, including interlaminar toughness, to resist a stress in directions other than the alignment direction of the reinforcement fibers while maintaining high compressive strength in the fiber direction under high temperature and high humidity conditions, which is required for aircraft structural members.

Furthermore, fiber-reinforced composite materials have recently been applied to an increased range of aircraft structural members, and fiber-reinforced composite materials are also in wider use for windmill blades and various turbines designed to achieve an improved power generation efficiency and energy conversion efficiency. Studies have been made to provide thick members produced from prepreg sheets consisting of an increased number of layers as well as members having three-dimensionally curved surfaces. If such a thick member or curved-surfaced member suffers from a load, i.e., tensile or compressive stress, the prepreg fiber layers may receive a peeling stress generated in an antiplane direction, which can cause opening-mode Interlaminar cracks. As these cracks expand, the overall strength and rigidity of the member can deteriorate, possibly leading to destruction of the entire member. Opening-mode, that is, mode I, interlaminar toughness is necessary to resist this stress.

Compared to this, there is a proposal of a technique that uses high-toughness particle material of, for example, polyamide disposed in regions between fiber layers so that the interlaminar toughness will be increased to prevent damage to the surface that may be caused in falling weight impact test (see patent document 1). Even this technique, however, cannot serve adequately for improvement relating to mode I interlaminar toughness.

It is known that this is attributed to the fact that in the mode I interlaminar toughness test, cracks generated deviate from the interlaminar region and propagate in the interior of the fiber layers where particles do not exist. To avoid such propagation of cracks in the interior of layers, it has been considered effective to maintain adequate adhesiveness between the reinforcement fiber and matrix resin and improve the balance between the elastic modulus and toughness in the matrix resin, but practical solutions have not been found yet because a very high moist heat resistance is required to develop good fiber-reinforced composite material.

Various techniques for blending a high-toughness rubber component and thermoplastic resin in an effort to develop a method to produce epoxy resin with an improved toughness, but these techniques had problems low deterioration processability due to decreased heat resistance and increased viscosity and poor quality due to void generation.

In this context, a method is recently proposed that is intended to produce epoxy resin with largely improve toughness by adding a styrene-butadiene-methyl methacrylate copolymer or butadiene-methyl methacrylate block copolymer in order to ensure stable formation of fine phase separation structures during the curing step of the epoxy resin. In this respect, amine type epoxy resin has been mainly used to produce highly heat resistant fiber-reinforced composite materials required for aircraft etc., but this resin has the problem of being able only to provide brittle cured materials because of poor compatibility with the above block copolymers.

To solve this problem, Patent document 2 proposes a technique that can achieve a high toughness while maintain elastic modulus by using an appropriate block copolymer, in particular, a methyl methacrylate-butyl acrylate block copolymer that is in the form of a random copolymer composed of amine type epoxy resin containing highly polar groups. In addition, Patent document 3 proposes a technique that achieves an improved impact resistance while depressing the decrease in heat resistance and elastic modulus by blending a block copolymer with a base epoxy resin composed of an amine type epoxy resin and an epoxy resin with a rigid backbone at a specific blending ratio.

However, these approaches are still unable to develop high mode I interlaminar toughness by avoiding the propagation of cracks within layers while maintaining a certain degree of moist heat resistance. When they are applied to large structural members such as main wing structures of aircraft and blades of windmills, furthermore, there will occur to other problems such as variations in characteristics attributable to morphological variations in an irregular temperature distribution in the furnace or differences in heat history in the material at different positions in the thickness direction.

Thus, there have been no efforts that have successfully developed a fiber-reinforced composite material that has a high mode I interlaminar toughness required for producing large structural members.

Prior Art Documents

Patent Documents

Patent document 1: U.S. Patent No. 5,028,478 (specification)
Patent document 2: International Publication WO2008/143044 Pamphlet
Patent document 3: International Publication WO2010/035859 Pamphlet

Summary of the Invention

Problems to be Solved by the Invention

An object of the present invention is to provide an epoxy resin composition that serves to produce fiber-reinforced composite material suffering from little morphology variation under varied molding conditions and at the same time having high mode I interlaminar toughness and moist heat resistance, and also provide prepreg and fiber-reinforced composite material.

Means of Solving the Problems

The present invention adopts one or more of the following constitutions to meet the above object. Specifically, the present invention provides an epoxy resin composition for fiber-reinforced composite material including at least the components [A] to [F] listedbelow, the components [C] and [E] accounting for 5 to 25 parts by mass and 2 to 15 parts by mass, respectively, relative to the total 100 parts by mass of the epoxy resin blended:

[A] bifunctional amine type epoxy resin
[B] tetrafunctional amine type epoxy resin
[C] bisphenol F type epoxy resin with an epoxy equivalent of 450 to 4,500
[D] aromatic amine curing agent
[E] block copolymer containing a reactive group that can react with epoxy resin
[F] thermoplastic resin particle insoluble in epoxy resin.

According to a preferred embodiment of the epoxy resin composition of the present invention, the bifunctional amine type epoxy resin [A] is a bifunctional epoxy resin having a structure as represented by general formula (1) given below:

[Chemical formula 1]

(1)

(In the formula, $R^1$ and $R^2$ are at least independently one selected from the group consisting of an aliphatic hydrocarbon group with a carbon number of 1 to 4, alicyclic hydrocarbon group with a carbon number of 3 to 6, aromatic hydrocarbon group with a carbon number of 6 to 10, halogen atom, acyl group, trifluoromethyl group, and nitro group; if a plurality of $R^1$'s or $R^2$'s exist, they may be either identical to or different from each other; n and m are an integer of 0 to 4 and an integer of 0 to 5, respectively; and X is one selected from the group consisting of -O-, -S-, -CO-, -C(=O)O-, and $-SO_2-$. According to a more preferred embodiment, the bifunctional amine type epoxy resin accounts for 5 to 35 parts by mass relative to the total 100 parts by mass of the epoxy resin in the epoxy resin composition.

According to a preferred embodiment of the epoxy resin composition of the present invention, the tetrafunctional amine type epoxy resin [B] accounts for 15 to 60 parts by mass relative to the total 100 parts by mass of the epoxy resin in the epoxy resin composition.

According to a preferred embodiment of the epoxy resin composition of the present invention, the aromatic amine curing agent [D] is a diaminodiphenyl sulfone or either a derivative or isomer thereof.

According to a preferred embodiment of the epoxy resin composition of the present invention, the reactive group in the aforementioned block copolymer containing a reactive group that can react with epoxy resin [E] is a carboxyl group. According to a more preferred embodiment, the block copolymer containing a reactive group that can react with epoxy resin [E] is at least one block copolymer selected from the group consisting of those having a structure of S-B-M, B-M or M-B-M. Here, each of the blocks is connected to an adjacent one via a covalent bond, or via an intermediary molecule that is connected to the block via a covalent bond and connected to the adjacent one via another covalent bond; block M comprises a homopolymer of polymethyl methacrylate or a copolymer that contains at least 50 mass% of methyl methacrylate and also contains a reactive monomer as a copolymerization component; block B is incompatible with block M and has a glass transition temperature of 20°C or less; and block S is incompatible with blocks B and M and has a glass transition temperature that is higher than the glass transition temperature of block B.

For the present invention, furthermore, the aforementioned epoxy resin composition can be cured to produce cured resin; the aforementioned epoxy resin composition can serve to impregnate reinforcement fiber to produce prepreg; the prepreg can be cured to produce fiber-reinforced composite material; and fiber-reinforced composite material including the cured resin and reinforcement fiber can be produced.

For the present invention, furthermore, the prepreg is preferably such that 90% or more of the thermoplastic resin particles insoluble in epoxy resin [F] are localized within surface regions with a depth accounting for 20% of the thickness of the prepreg, and such prepreg can be cured to produce fiber-reinforced composite material.

Advantageous Effect of the Invention

The present invention can provide fiber-reinforced composite material suffering from little morphology variation under varied molding conditions and at the same time having high mode I interlaminar toughness and moist heat resistance and also provide an epoxy resin composition and prepreg that serve for the production thereof.

In particular, this fiber-reinforced composite material is so small in the morphology variation under varied molding conditions that the material is high in reliability and preferred as material for large structural members such as aircraft.

Description of Preferred Embodiments

Described in detail below are the epoxy resin composition, prepreg, and fiber-reinforced composite material according to the present invention.

The epoxy resin composition according to the present invention includes bifunctional amine type epoxy resin

[A], tetrafunctional amine type epoxy resin [B], bisphenol F type epoxy resin with an epoxy equivalent of 450 to 4,500 [C], aromatic amine curing agent [D], block copolymer containing a reactive group that can react with epoxy resin [E], and thermoplastic resin particle insoluble in epoxy resin [F].

There are no specific limitations on the bifunctional amine type epoxy resin [A] to be used for the present invention as long as it is amine type epoxy resin that contains two epoxy groups in one molecule, and examples thereof include, for instance, diglycidyl aniline, diglycidyl toluidine, halogen or alkyl substitutes thereof, and hydrogenated products thereof.

In respect to the blending quantity, the bifunctional amine type epoxy resin [A] preferably accounts for 5 to 35 parts by mass, more preferably 15 to 25 parts by mass, of the total 100 parts by mass of the epoxy resin. If it is in this range, the fiber-reinforced composite material will have high strength while having low viscosity and improved suitability for impregnation of reinforcement fiber.

Examples of the bifunctional amine type epoxy resin [A] preferred for the present invention include epoxy resin compounds containing two or more ring structures having four or more members and glycidyl amino groups directly connected to the ring structures. Here, an epoxy resin compound "containing two or more ring structures having four or more members" either contains two or more monocyclic ring structures each having four or more members, such as cyclohexane, benzene, and pyridine, or contains at least one condensed ring structure composed of 4- or more membered rings, such as phthalimide, naphthalene, and carbazole. In a bifunctional amine type epoxy resin [A] having glycidyl amino groups directly connected to the ring structures, the N atom of each glycidyl amino group is bonded to a ring structure such as in benzene.

Such epoxy resin compounds containing two or more ring structures having four or more members and glycidyl amino groups directly connected to the ring structures include N,N-diglycidyl-4-phenoxy aniline, N,N-diglycidyl-4-(4-methyl phenoxy) aniline, N,N-diglycidyl-4-(4-tert-butyl phenoxy) aniline, and N,N-diglycidyl-4-(4-phenoxy phenoxy) aniline. In many cases, these resin compounds can be produced by adding epichlorohydrin to a phenoxy aniline derivative and cyclized with an alkali compound. Since the viscosity increases with an increasing molecular weight, N,N-diglycidyl-4-phenoxy aniline, that is, a bifunctional amine type epoxy resin [A] in which both $R^1$ and $R^2$ are a hydrogen atom, is particular preferred from the viewpoint of handleability.

Specifically, usable phenoxy aniline derivatives include 4-phenoxy aniline, 4-(4-methyl phenoxy) aniline, 4-(3-methyl phenoxy) aniline, 4-(2-methyl phenoxy) aniline, 4-(4-ethyl phenoxy) aniline, 4-(3-ethyl phenoxy) aniline, 4-(2-ethyl phenoxy) aniline, 4-(4-propyl phenoxy) aniline, 4-(4-tert-butyl phenoxy) aniline, 4-(4-cyclohexyl phenoxy) aniline, 4-(3-cyclohexyl phenoxy) aniline, 4-(2-cyclohexyl phenoxy) aniline, 4-(4-methoxy phenoxy) aniline, 4-(3-methoxy phenoxy) aniline, 4-(2-methoxy phenoxy) aniline, 4-(3-phenoxy phenoxy) aniline, 4-(4-phenoxy phenoxy) aniline, 4-[4-(trifluoromethyl) phenoxy] aniline, 4-[3-(trifluoromethyl) phenoxy] aniline, 4-[2-(trifluoromethyl) phenoxy] aniline, 4-(2-naphthyloxy phenoxy) aniline, 4-(1-naphthyloxy phenoxy) aniline, 4-[(1,1'-biphenyl-4-yl)oxy] aniline, 4-(4-nitrophenoxy) aniline, 4-(3-nitrophenoxy) aniline, 4-(2-nitrophenoxy) aniline, 3-nitro-4-aminophenyl phenyl ether, 2-nitro-4-(4-nitrophenoxy) aniline, 4-(2,4-dinitrophenoxy) aniline, 3-nitro-4-phenoxy aniline, 4-(2-chlorophenoxy) aniline, 4-(3-chlorophenoxy) aniline, 4-(4-chlorophenoxy) aniline, 4-(2,4-dichlorophenoxy) aniline, 3-chloro-4-(4-chlorophenoxy) aniline, and 4-(4-chloro-3-tolyloxy).

Described below is a typical production method for a bifunctional amine type epoxy resin [A] that is preferred for the present invention. A bifunctional amine type epoxy resin [A] that is preferred for the present invention can be produced by reacting epichlorohydrin with a phenoxy aniline derivative as represented by general formula (2) given below:

[Chemical formula 2]

NH2

R1n

X

R2m

(2)

(In the formula, $R^1$ and $R^2$ are at least independently one selected from the group consisting of an aliphatic

hydrocarbon group with a carbon number of 1 to 4, alicyclic hydrocarbon group with a carbon number of 3 to 6, aromatic hydrocarbon group with a carbon number of 6 to 10, halogen atom, acyl group, trifluoromethyl group, and nitro group; if a plurality of $R^1$'s or $R^2$'s exist, they may be either identical to or different from each other; n and m are an integer of 0 to 4 and an integer of 0 to 5, respectively; and X represents one selected from the group consisting of -O-, -S-, -CO-, -C(=O)O-, and $-SO_2-$ .

Specifically, as in the case of producing general epoxy resin, the production method for the bifunctional amine type epoxy resin [A] includes an addition reaction step for adding two epichlorohydrin molecules to each molecule of a phenoxy aniline derivative to produce a dichlorohydrin as represented by general formula (3) given below.

[Chemical formula 3]

(3)

(In the formula, $R^1$ and $R^2$ are at least independently one selected from the group consisting of an aliphatic hydrocarbon group with a carbon number of 1 to 4, alicyclic hydrocarbon group with a carbon number of 3 to 6, aromatic hydrocarbon group with a carbon number of 6 to 10, halogen atom, acyl group, trifluoromethyl group, and nitro group; if a plurality of $R^1$'s or $R^2$'s exist, they may be either identical to or different from each other; n and m are an integer of 0 to 4 and an integer of 0 to 5, respectively; and X represents one selected from the group consisting of -O-, -S-, -CO-, -C(=O)O-, and $-SO_2-$. Also included a subsequent cyclization step for dehydrochlorinating the dichlorohydrin with an alkali compound to produce an epoxy compound, that is, a bifunctional epoxy compound as represented by general formula (1) given below:

[Chemical formula 4]

(1)

(In the formula, $R^1$ and $R^2$ are at least independently one selected from the group consisting of an aliphatic hydrocarbon group with a carbon number of 1 to 4, alicyclic hydrocarbon group with a carbon number of 3 to 6, aromatic hydrocarbon group with a carbon number of 6 to 10, halogen atom, acyl group, trifluoromethyl group, and nitro group; if a plurality of $R^1$'s or $R^2$'s exist, they may be either identical to or different from each other; n and m are an integer of 0 to 4 and an integer of 0 to 5, respectively; and X represents one selected from the group consisting of -O-, -S-, -CO-, -C(=O)O-, and $-SO_2-$ .

Commercial products that can serve as the bifunctional amine type epoxy resin [A] for the present invention include GAN (diglycidyl aniline, manufactured by Nippon Kayaku Co., Ltd.), GOT (diglycidyl toluidine, manufactured by

Nippon Kayaku Co., Ltd.), and PxGAN (diglycidyl aniline, manufactured by Toray Fine Chemicals Co., Ltd.).

There are no specific limitations on the tetrafunctional amine type epoxy resin [B] to be used for the present invention as long as it is amine type epoxy resin that contains four epoxy groups in one molecule, and examples thereof include, for instance, tetraglycidyl diaminodiphenyl methane, tetraglycidyl xylylene diamine, halogen or alkyl substitutes thereof, and hydrogenated products thereof.

In respect of the blending quantity, the tetrafunctional amine type epoxy resin [B] preferably accounts for 15 to 60 parts by mass, more preferably 25 to 45 parts by mass, of the total 100 parts by mass of the epoxy resin. If it is in this range, the fiber-reinforced composite material can gain high toughness while maintaining a required degree of heat resistance.

Usable commercial products of tetraglycidyl diaminodiphenyl methane include "Sumiepoxy (registered trademark)" ELM434 (manufactured by Sumitomo Chemical Co., Ltd.), YH434L (supplied by Nippon Steel Chemical Co., Ltd.), jER (registered trademark) 604 (manufactured by Mitsubishi Chemical Corporation), and Araldite (registered trademark) MY720 and MY721 (both manufactured by Huntsman Advanced Materials Gmbh).

Usable commercial products of tetraglycidyl xylylene diamines and hydrogenated compounds thereof include Tetrad (registered trademark) -X and -C (both manufactured by Mitsubishi Gas Chemical Co., Inc.)

There are no specific limitations on the bisphenol F type epoxy resin with an epoxy equivalent of 450 to 4,500 [C], and generally, bisphenol F type epoxy resins that have an epoxy equivalent of 450 to 4,500, halogen or alkyl substitutes thereof, and hydrogenated products thereof may be used. It is preferable that they have an epoxy equivalent in the range of 450 to 1,000. If the epoxy equivalent is in this range, they are high in adhesiveness to reinforcement fiber and can develop high mode I interlaminar toughness while avoiding the propagation of cracks within the layers. If it is less than 450, the resulting cured resin will be poor in plastic deformation capacity and the component [E] will have a bulky structure, leading to a lack in toughness. If it is more than 4,500, the cured resin will lack heat resistance, and the resin composition will be high in viscosity, leading to poor handleability.

Such a bisphenol F type epoxy resin [C] with an epoxy equivalent of 450 to 4,500 contained in the epoxy resin composition should account for 5 to 25 parts by mass of the total 100 parts by mass of the epoxy resin, and preferably accounts for 10 to 20 parts by mass of the total 100 parts by mass of the epoxy resin. If the content is less than 5 parts by mass, the resulting cured product will fail to have a sufficient plastic deformation capacity and sufficient adhesiveness to reinforcement fiber, and the fiber-reinforced composite material will suffer from a decreased in the mode I interlaminar toughness. If it is more than 25 parts by mass, the resin composition will be high in viscosity, leading to poor handleability.

Usable commercial products of such a bisphenol F type epoxy resin [C] with an epoxy equivalent of 450 to 4,500 include jER (registered trademark) 4002P, 4004P, 4005P, 4007P, 4009P, and 4010P (all manufactured by Mitsubishi Chemical Corporation) and Epotohto (registered trademark) YDF-2001 and YDF-2004 (both manufactured by Nippon Steel Chemical Co., Ltd.).

The aromatic amine curing agent [D] used for the present invention is a component necessary to cure the epoxy resin. Specific examples of the component include various derivatives and isomers of diaminodiphenyl methane and diaminodiphenyl sulfone, aminobenzoic acid esters, and aromatic carboxylic acid hydrazides. These epoxy resin curing agents may be used singly or in combination. In particular, the use of 3,3'-diaminodiphenyl sulfone or 4,4'-diaminodiphenyl sulfone, or their combined use is particular preferred because of high heat resistance and mechanical characteristics.

When diaminodiphenyl sulfone is used as the component [D], its blending quantity is preferably such that the number of active hydrogen atoms is 0.6 to 1.2 times, preferably 0.7 to 1.1 times, that of epoxy groups in the epoxy resin from the viewpoint of heat resistance and mechanical characteristics. If it is less than 0.6 times, the resulting cured product will fail to have a sufficiently high crosslink density, leading to a lack of elastic modulus and heat resistance, and the resulting fiber-reinforced composite material will not have sufficiently static strength characteristics. If it is more than 1.2 times, the resulting cured product will have an excessively high crosslink density and water absorption, and accordingly, a lack of deformation capacity, and the resulting fiber composite material will possibly fail to have a sufficient degree of mode I interlaminar toughness.

Usable commercial products of aromatic amine curing agents include Seikacure S (manufactured by Wakayama Seika Kogyo Co., Ltd.), MDA-220 and 3,3'-DAS (both manufactured by Mitsui Chemicals, Inc.), jER Cure (registered trademark) W (manufactured by Mitsubishi Chemical Corporation), and Lonzacure (registered trademark) M-DEA, M-DIPA, M-MIPA, and DETDA 80 (all manufactured by Lonza).

The composition to be used may contain these epoxy resins and curing agents, part of which may be subjected to a preliminary reaction in advance. In some cases, this method can serve effectively for adjustment in viscosity and improvement in storage stability of the resin composition.

It is essential for the epoxy resin composition according to the present invention to include a block copolymer having a reactive group that can react with epoxy resin [E]. An reactive group that can react with epoxy resin as defined for the present invention is a functional group that can react with the oxirane group in the epoxy molecule or the functional group in the curing agent. For example, such groups include, but not limited to, functional groups such as oxirane group, amino group, hydroxyl group, and carboxyl group. In particular, block copolymers that contain a carboxyl group as

reactive group are used favorably because they form fine phase separation structures to ensure high toughness. For example, the reactive monomers that are useful for introducing a reactive group into a block copolymer include (meth)acrylic acid (in the present Description, methacrylic acid and acrylic acid are collectively referred to as (meth)acrylic acid) and monomers that can form (meth)acrylic acid through hydrolysis. The use of such a reactive monomer to introduce a reactive group into a block copolymer serves to increase the compatibility with epoxy resin, improve the adhesion at the interface between epoxy and a block copolymer, and depress the morphology variations that may occur depending on the molding conditions.

It is also preferable that the block copolymer containing a reactive group that can react with epoxy resin [E] be at least one block copolymer selected from the group consisting of copolymers having a structure of S-B-M, B-M, or M-B-M (hereinafter, occasionally referred to simply as block copolymers). As a result, it becomes possible for an epoxy resin composition to have improved toughness and impact resistance while maintaining high heat resistance.

Here, each of the aforementioned blocks represented as S, B, and M is connected to an adjacent one via a covalent bond, or via an intermediary molecule that is connected to the block via a covalent bond and connected to the adjacent one via another covalent bond.

A block M contains a homopolymer of polymethyl methacrylate or a copolymer in which methyl methacrylate accounts for at least 50 wt%. To allow the block copolymer [E] to be able to react with an oxirane group in an epoxy molecule or a functional group in a curing agent, furthermore, it is preferable for the block M to contain a reactive monomer as a copolymerization component.

A block B is incompatible with a block M and has a glass transition temperature Tg (hereinafter, occasionally referred to simply as Tg) of 20°C or less. Regardless of whether the block B is produced from an epoxy resin composition or a single block copolymer, its glass transition temperature Tg can be measured by DMA using ARES-G2 (manufactured by TA Instruments). Specifically, a plate-like specimen of 1 $\times$ 2.5 $\times$ 34 mm is subjected to DMA while applying periodic traction at 1 Hz in the temperature range of -100 to 250°C, and the value of tan $\delta$ is assumed to represent its glass transition temperature Tg. Here, specimens are prepared as follows. In the case where an epoxy resin composition is used, an uncured resin composition is deaerated in a vacuum and then cured for 2 hours at a temperature of 130°C in a mold set to a thickness of 1 mm using a Teflon (registered trademark) spacer with a thickness of 1 mm to produce a void-free plate-like cured material. In the case where a single block copolymer is used, a void-free plate can be produced similarly by using a twin screw extruder. These plates are cut to the aforementioned size using a diamond cutter to provide specimens for evaluation.

The block S is incompatible with the blocks B and M and has a glass transition temperature Tg that is higher than that of the block B.

From the viewpoint of improvement in toughness, furthermore, any of the blocks S, B, and M in an S-B-M type block copolymer or either the block B or M of a B-M or M-B-M type block copolymer be compatible with epoxy resin.

From the viewpoint of mechanical characteristics and adaptability to composite preparation processes, the content of the block copolymer containing a reactive group that can react with epoxy resin [E] is preferably in the range of 2 to 15 parts by mass, more preferably 3 to 10 parts by mass, still more preferably 4 to 8 parts by mass, relative to the total 100 parts by mass of the epoxy resin in the epoxy resin composition. If the content is less than 2 parts by mass, the resulting cured material will have a decreased toughness and plastic deformability, leading to a fiber-reinforced composite material with a decreased mode I interlaminar toughness. If the content is more than 15 parts by mass, the resulting cured material will have a significantly decreased elastic modulus, leading to a fiber-reinforced composite material with a decreased static strength characteristics. In addition, adequate resin flow will not take place at the molding temperature, often resulting in a fiber-reinforced composite material containing voids.

The glass transition temperature Tg of a block B is 20°C or less, preferably 0°C or less, and more preferably -40°C or less. The glass transition temperature Tg should be as low as possible from the viewpoint of toughness, but a Tg of less than -100°C may cause some processability problems possibly resulting in a fiber-reinforced composite material with a rough cut surface.

The block B is preferably an elastomer block, and it is preferable that the monomer to be used to synthesize such an elastomer block be a diene selected from the group consisting of butadiene, isoprene, 2,3-dimethyl-1,3-butadiene, 1,3-pentadiene, and 2-phenyl-1,3-butadiene. From the viewpoint of toughness, in particular, it should preferably be selected from the group consisting of polybutadiene, polyisoprene, random copolymer thereof, partially or entirely hydrogenated polydiene. Useful polybutadiene compounds include 1,2-polybutadiene (Tg: about 0°C), but it is more preferable to use a polybutadiene with a lowest level glass transition temperature Tg such as 1,4-polybutadiene (Tg: about -90°C). This is because the use of a block B with a lower glass transition temperature Tg is advantageous from the viewpoint of impact resistance and toughness. The block B may be hydrogenated. This hydrogenation may be effected by a common method.

Useful monomers to constitute a block B also include alkyl (meth)acrylates. Specific examples include ethyl acrylate (-24°C), butyl acrylate (-54°C), 2-ethylhexyl acrylate (-85°C), hydroxyethyl acrylate (-15°C), and 2-ethylhexyl methacrylate (-10°C). Here, the figure in parentheses following each acrylate compound name shows the Tg of the block

B that is formed from the acrylate compound. Of these, the use of butyl acrylate is preferable. These acrylate monomers are incompatible with the acrylate component in a block M in which methyl methacrylate accounts for at least 50 wt%.

Of these, a block formed from a polymer selected from the group consisting of 1,4-polybutadiene, polybutyl acrylate, and poly (2-ethylhexyl acrylate) is preferred as the block B.

If a triblock copolymer -S-B-M is used as the block copolymer, the block S should be incompatible with the blocks B and M, and its glass transition temperature Tg should be higher than that of the block B. The Tg or melting point of a block S is preferably 23°C or more, more preferably 50°C or more. Examples of the block S include those formed from an aromatic vinyl compound such as styrene, $\alpha$-methyl styrene, or vinyl toluene and those formed from alkyl acid with an alkyl chain with a carbon atom of 1 to 18 and/or an alkyl ester of methacrylic acid. Those formed from alkyl acid with an alkyl chain with a carbon atom of 1 to 18 and/or an alkyl ester of methacrylic acid are incompatible with a block M in which methyl methacrylate accounts for at least 50 wt%.

If a triblock copolymer M-B-M is used as the block copolymer, the two blocks M in the triblock copolymer M-B-M may be identical to or different from each other. They may be formed from the same type of monomers but have different molecular weights.

If a triblock copolymer M-B-M and a diblock copolymer B-M are used in combination as the block copolymer, the blocks M in the triblock copolymer M-B-M and the block M in the diblock copolymer B-M may be identical to or different from each other, and the block B in the triblock M-B-M and that in the diblock copolymer B-M may be identical to or different from each other.

If a triblock copolymer M-B-M and a diblock copolymer B-M are used in combination as the block copolymer, the blocks M in the triblock copolymer M-B-M and the block M in the diblock copolymer B-M may be identical to or different from each other, and the block B in the triblock M-B-M and that in the diblock copolymer B-M may be identical to or different from each other.

Block copolymers can be produced through anionic polymerization according to, for examaple, methods as described in European Patent EP 524,054 and European Patent EP 749,987.

Specific examples of such a block copolymer having a reactive group that can undergo reaction include Nanostrength (registered trademark) SM4032XM10 (manufactured by Arkema K.K.), which is a methyl methacrylate-butyl acrylate-methyl methacrylate triblock copolymer which contains a carboxyl group as a copolymerization component.

It is essential for the epoxy resin composition according to the present invention to contain thermoplastic resin particles insoluble in epoxy resin [F]. The addition of thermoplastic resin particles serves to produce a carbon fiber-reinforced composite material with an improved matrix resin toughness and improved mode I interlayer toughness.

Useful materials for the thermoplastic resin particles [F], that is, thermoplastic resins that can be used as a mixture with an epoxy resin composition, include vinyl polymer, polyester, polyamide, polyarylene ether, polyarylene sulfide, polyethersulfone, polysulfone, polyether ketone, polyether ether ketone, polyurethane, polycarbonate, polyamide-imide, polyimide, polyetherimide, polyacetal, silicone, and copolymers thereof. In particular, the most preferable are polyamides, of which nylon 12, nylon 11, and nylon 6/12 copolymer can achieve particularly strong adhesion with a thermosetting resin. In respect to the shape the thermoplastic resin particles, they may be spherical particles, non-spherical particles, or porous particles, of which spherical particles are preferable because they ensure high viscoelasticity by preventing the reduction in the flow characteristics of the resin and also ensure high interlaminar toughness by eliminating the starting points of stress concentrations.

Commercial products of polyamide particle include SP-500 (manufactured by Toray Industries, Inc.), Toraypearl (registered trademark) TN (manufactured by Toray Industries, Inc.), Orgasol (registered trademark) 1002D (manufactured by ATOCHEM), Orgasol (registered trademark) 2002 (manufactured by Atochem), Orgasol (registered trademark) 3202 (manufactured by Atochem), and Trogamid T5000.

In addition, the epoxy resin composition according to the present invention may contain epoxy resin components other than the components [A] to [C] with the aim of controlling the viscoelasticity during the uncured period to improve the workability and providing cured resin with improved elastic modulus and heat resistance. These may be used singly or as a combination of a plurality thereof. Specifically, they include bisphenol type epoxy resin, phenol novolac type epoxy resin, cresol novolac type epoxy resin, resorcinol type epoxy resin, dicyclopentadiene type epoxy resin, epoxy resin with a biphenyl backbone, and urethane- or isocyanate-modified epoxy resin.

Commercial products of bisphenol type epoxy resin include jER (registered trademark) 806, 807, 825, 828, 834, 1001, 1002, 1003, 1004, 1004AF, 1005F, 1006FS, 1007, 1009, 5050, 5054, and 5057 (all manufactured by Mitsubishi Chemical Corporation), YSLV-80XY, and Epicron (registered trademark) EXA-1514 (manufactured by DIC).

Commercial products of phenol novolac type epoxy resin include Epikote (registered trademark) 152 and 154 (both manufactured by Mitsubishi Chemical Corporation) and Epicron (registered trademark) N-740, N-770, and N-775 (all manufactured by DIC).

Commercial products of cresol novolac-type epoxy resin include Epicron (registered trademark) N-660, N-665, N-670, N-673, and N-695 (all manufactured by DIC), and EOCN-1020, EOCN-102S, and EOCN-1045 (all manufactured by Nippon Kayaku Co., Ltd.).

Commercial products of resorcinol type epoxy resin include Denacol (registered trademark) EX-201 (manufactured by Nagase ChemteX Corporation).

Commercial products of dicyclopentadiene type epoxy resin include Epicron (registered trademark) HP7200, HP7200L, and HP7200H (all manufactured by DIC), Tactix 558 (manufactured by Huntsman Advanced Materials Gmbh) XD-1000-1L, and XD-1000-2L (all manufactured by Nippon Kayaku Co., Ltd.).

Commercial products of epoxy resin with a biphenyl backbone include Epikote (registered trademark) YX4000H, YX4000, and YL6616 (all manufactured by Mitsubishi Chemical Corporation) and NC-3000 (manufactured by Nippon Kayaku Co., Ltd.).

Commercial products of urethane- or isocyanate-modified epoxy resin include AER4152 (manufactured by Asahi Kasei E-materials Corporation) and ACR1348 (manufactured by Asahi Denka Co. Ltd.), which have an oxazolidone ring.

In addition, components other than epoxy resin and the components [D] to [F] may also be contained unless they impair the advantageous effects of the present invention. For example, the epoxy resin composition according to the present invention may contain a thermoplastic resin soluble in epoxy resin and different from the component [F] and organic or inorganic particles such as rubber particles and thermoplastic resin particles with the aim of controlling the viscoelasticity to provide prepreg with improved tackiness and drape characteristics and providing fiber-reinforced composite material with improved impact resistance and mechanical characteristics.

The addition of a thermoplastic resin containing a hydrogen-bonding functional group such as alcoholic hydroxyl group, amide bond, and sulfonyl group as the aforementioned thermoplastic resin soluble in epoxy resin is preferable because it is expected to improve the adhesion between the resin and reinforcement fiber. Specifically, thermoplastic resins containing an alcoholic hydroxyl group include polyvinyl formal, polyvinyl butyral, other polyvinyl acetal resins, polyvinyl alcohol, and phenoxy resin; thermoplastic resins containing an amide bond include polyamide, polyimide, and polyvinyl pyrolidone; and thermoplastic resins containing a sulfonyl group include polysulfone. Such polyamides, polyimides, and polysulfones may contain, in their backbone chain, an ether bond or a functional group such as carbonyl group. In these polyamides, the nitrogen atom in the amide group may have a substituent group. Commercial products of thermoplastic resin soluble in epoxy resin and having a hydrogen-bonding functional group include polyvinyl acetal resin products such as Denka Butyral and Denka Formal (registered trademark) (manufactured by Denki Kagaku Kogyo Kabushiki Kaisha) and Vinylec (registered trademark) (manufactured by Chisso Corporation); phenoxy resin products such as UCAR (registered trademark) PKHP (manufactured by Union Carbide Corporation); polyamide resin products such as Macromelt (registered trademark) (manufactured by Henkel Hakusui Corporation) and Amilan (registered trademark) CM4000 (manufactured by Toray Industries, Inc.); polyimide products such as Ultem (registered trademark) (manufactured by General Electric Company) and Matrimid (registered trademark) 5218 (Ciba); polysulfone products such as Victrex (registered trademark) (manufactured by Mitsui Chemicals, Inc.) and UDEL (registered trademark) (manufactured by Union Carbide Corporation); and polyvinyl pyrolidone products such as Luviskol (registered trademark) (manufactured by BASF Japan).

In addition to the above ones, acrylic resin, which is high in compatibility with epoxy resin, is also used favorably, as the aforementioned thermoplastic resin soluble in epoxy resin, with the aim of viscoelasticity control. Commercial products of such acrylic resin include Dianal (registered trademark) BR series (manufactured by Mitsubishi Rayon Co., Ltd.), Matsumoto Microsphere (registered trademark) M, M100, and M500 (Matsumoto Yushi-Seiyaku Co., Ltd.).

From the viewpoint of handleability etc., it is preferable that the aforementioned rubber particles be crosslinked rubber particles or core-shell rubber particles formed of crosslinked rubber particles and a heterogeneous polymer graft-polymerized to their surfaces.

Commercial products of such crosslinked rubber particles include FX501P (manufactured by Japan Synthetic Rubber Co., Ltd.), which is formed of a crosslinked, carboxyl modified butadiene-acrylonitrile copolymer, and the CX-MN series (manufactured by Nippon Shokubai Co., Ltd.) and YR-500 series (manufactured by Nippon Steel Chemical Co., Ltd.) products, which are formed of fine acrylic rubber particles.

Commercial products of such core shell rubber particles include, for instance, Paraloid (registered trademark) EXL-2655 (manufactured by Kureha Chemical Industry Co., Ltd.), which is formed of a butadiene-alkyl methacrylate-styrene copolymer, Stafiloid (registered trademark) AC-3355 and TR-2122 (manufactured by Takeda Pharmaceutical Company Limited), which are formed of an acrylate-methacrylate copolymer, Paraloid (registered trademark) EXL-2611 and EXL-3387 (manufactured by Rohm and Haas Company), which are formed of a butyl acrylate-methyl methacrylate copolymer, and Kane Ace (registered trademark) MX series (manufactured by Kaneka Corporation).

For preparing the epoxy resin composition according to the present invention, it is preferred to use such a tool as kneader, planetary mixer, three roll mill, or a twin screw extruder. The block copolymer [E] is fed to epoxy resin and kneaded, and the composition is heated to an appropriate temperature in the range of 130 to 180°C while stirring, followed by continued stirring at the temperature to ensure complete dissolution of the block copolymer [E] in the epoxy resin. The method including the steps for dissolving the block copolymer [E] in epoxy resin to prepare a transparent viscous liquid, cooling it while stirring to a temperature of preferably 120°C or less, more preferably 100°C or less, adding

the aromatic amine curing agent [D] and thermoplastic resin particles insoluble in epoxy resin [F], and kneading the mixture, is used favorably because the block copolymer [E] will not be separated easily in bulky bodies and the resin composition will have high storage stability.

If the epoxy resin composition according to the present invention is used as matrix resin of prepreg, it preferably has a viscosity 80°C in the range of 0.1 to 200 Pa•s, more preferably 0.5 to 100 Pa•s, and still more preferably 1 to 50 Pa•s, from the viewpoint of processability related characteristics such as tackiness and drape. If the viscosity at 80°C is less than 0.1 Pa•s, the resulting prepreg may be low in shape retaining capability and liable to fracture and serious resin flows may take place during the molding step, possibly leading to variations in the fiber content. If the viscosity at 80°C is more than 200 Pa•s, thin spots may take place during film production from the resin composition, and some portions may be left unimpregnated during the reinforcement fiber impregnation step.

When the epoxy resin composition according to the present invention is used for producing prepreg for aircraft's primary structural members, in particular, its lowest viscosity limit is preferably in the range of 0.05 to 20 Pa•s, more preferably 0.1 to 10 Pa•s. If the lowest viscosity limit is less than 0.05 Pa•s, the resulting prepreg may be low in shape retaining capability and liable to fracture and serious resin flows may take place during the molding step, possibly leading to variations in the reinforcement fiber content. If the lowest viscosity limit is more than 20 Pa•s, thin spots may take place during film production from the epoxy resin composition, and some portions may be left unimpregnated during the reinforcement fiber impregnation step.

The viscosity referred to herein is the complex viscosity $\eta^*$ that is determined by simply heating a specimen at a heating rate of 2°C/min and making measurements at a frequency of 0.5 Hz and a gap of 1 mm using a dynamic viscoelasticity measuring apparatus (ARES-G2, manufactured by TA Instruments) equipped with parallel plates with a diameter of 40 mm.

In the curing step of the epoxy composition according to the present invention, the block copolymer [E] undergoes phase separation to form fine phase separation structures. More specifically, of the plurality of blocks in the block copolymer [E], those which are lower in compatibility with epoxy resin undergo phase separation during the curing step. It is preferable that when cured at 180°C for 2 hours, the epoxy resin composition according to the present invention form phase separation structures containing the components [A] to [E] and having a size in the range of 0.01 to 5 μm. Here, in the case of a sea-island configuration, the size of the phase separation structures (hereinafter referred to as phase separation size) is the number average size of the island phase regions. The major axis of an elliptical island phase region or the diameter of the circumscribed circle about an irregular shaped island phase region is taken as its size. In the case of a multilayered region of circular or elliptical shapes, the diameter or the major axis of the outermost layer is used. For a sea-island configuration, all the island phase regions in predetermined areas are examined and the number average of their major axis measurements is assumed to represent their phase separation size. Such predetermined areas are taken as follows on the basis of microscopic photographs. For a specimen with an assumed phase separation size of the order of 10 nm (10 nm or more and less than 100 nm), a photograph is taken at a magnification of 20,000 times and three 4 mm square areas (200 nm square areas on the specimen) are selected randomly on the photograph, and similarly, for a specimen with an assumed phase separation size of the order of 100 nm (100 nm or more and less than 1,000 nm), a photograph is taken at a magnification of 2,000 times and three 4 mm square areas (2 μm square areas on the specimen) are selected randomly on the photograph. For a specimen with an assumed phase separation size of the order of 1 μm (1 μm or more and less than 10 μm), a photograph is taken at a magnification of 200 times and three 4 mm square areas (20 μm square areas on the specimen) are selected randomly on the photograph. If the measured phase separation size is largely different from the expected size range, other areas where the specimen is expected to be in the assumed size range are examined to provide adoptable value. In the case of a bicontinuous structure, straight lines with predetermined lengths are drawn on a microscopic photograph, and the intersections between the straight lines and the phase-to-phase interfaces are determined. Then, the distance between each pair of adjacent intersections is measured and the number average of the distance measurements is taken to represent the phase separation size. Such lines with a predetermined length are defined as follows on the basis of microscopic photographs. For a specimen with an assumed phase separation size of the order of 10 nm (10 nm or more and less than 100 nm), a photograph is taken at a magnification of 20,000 times and three 20 mm lines (1,000 nm length on the specimen) are selected randomly on the photograph, and similarly, for a specimen with an assumed phase separation size of the order of 100 nm (100 nm or more and less than 1,000 nm), a photograph is taken at a magnification of 2,000 times and three 20 mm lines (10 μm length on the specimen) are selected randomly on the photograph. For a specimen with an assumed phase separation size of the order of 1 μm (1 μm or more and less than 10 μm), a photograph is taken at a magnification of 200 times and three 20 mm lines (100 μm length on the specimen) are selected randomly on the photograph. If the measured phase separation size is largely different from the expected size range, other areas where the specimen is expected to be in the assumed size range are examined to provide adoptable value. Here, island phase regions with a size of 0.1 mm or more are selected for taking measurements on photographs. This phase separation size is preferably in the range of 10 to 500 nm, more preferably 10 to 200 nm, and particularly preferably 15 to 100 nm. If the phase separation size is less than 10 nm, the resulting cured product may not have a sufficiently high toughness and the fiber-reinforced composite material may not have a sufficiently high mode I interlaminar toughness. In the case of coarse phase separation with a phase separation size of more than 500 nm, the resulting cured product may not have a sufficiently high plastic deformation capacity or toughness and the fiber-reinforced composite material may not have a sufficiently high mode I interlaminar toughness. This phase separation structure can be analyzed by observing the cross section of cured resin by scanning electron microscopy or transmission electron microscopy. If necessary, the specimen may be dyed with osmium. Dyeing is performed by a common method.

It is preferable for the phase separation structure size to be sufficiently small in dependence on the molding conditions. If this dependence is small, significant morphological variations will not take place easily during the molding step, and a uniform phase separation structure can be formed and consequently, stable mechanical characteristics can be develop when producing, for example, large aircraft members. Specifically, when the heating rate is changed from, for example, 1.5°C/min to 5°C/min during the molding step, the variation in the aforementioned phase separation structure size is preferably ±20% or less, more preferably ±10% or less.

Different types of reinforcement fiber can serve for the present invention, and they include glass fiber, carbon fiber, graphite fiber, aramid fiber, boron fiber, alumina fiber, and silicon carbide fiber. Two or more of these types of reinforcement fiber may be used in combination, but the use of carbon fiber and graphite fiber is preferred to provide lightweight moldings with high durability. With a high specific modulus and specific strength, carbon fiber is used favorably, particularly when it is necessary to produce lightweight or high-strength materials.

In respect to carbon fiber used favorably for the present invention, virtually any appropriate type of carbon fiber can be adopted for varied uses, but it is preferable that the carbon fiber to be used has a tensile modulus not more than 400 GPa from the viewpoint of impact resistance etc. From the viewpoint of strength, carbon fiber with a tensile strength of 4.4 to 6.5 GPa is used preferably because a composite material with high rigidity and mechanical strength can be produced. Tensile elongation is also an important factor, and it is preferable that the carbon fiber have a high strength and a high elongation percentage of 1.7 to 2.3%. The most suitable carbon fiber will have various good characteristics simultaneously including a tensile modulus of at least 230 GPa, tensile strength of at least 4.4 GPa, and tensile elongation of at least 1.7%.

Commercial products of carbon fiber include Torayca (registered trademark) T800G-24K, Torayca (registered trademark) T800S-24K, Torayca (registered trademark) T700G-24K, Torayca (registered trademark) T300-3K, and Torayca (registered trademark) T700S-12K (all manufactured by Toray Industries, Inc.).

With respect to the form and way of alignment of carbon fibers, long fibers paralleled in one direction, woven fabric, or others may be selected appropriately, but if a carbon fiber-reinforced composite material that is lightweight and relatively highly durable is to be obtained, it is preferable to use carbon fibers in the form of long fibers (fiber bundles) paralleled in one direction, woven fabric, or other continuous fibers.

Carbon fiber bundles to be used favorably for the present invention preferably have a monofilament fineness of 0.2 to 2.0 dtex, more preferably 0.4 to 1.8 dtex. If the monofilament fineness is less than 0.2 dtex, carbon fiber bundles may be damaged easily due to contact with guide rollers during twining, and similar damage may take place during impregnation with the resin composition. If the monofilament fineness is more than 2.0 dtex, the resin composition may fail to impregnate carbon fiber bundles sufficiently, possibly resulting in a decrease in fatigue resistance.

The carbon fiber bundles used favorably for the present invention preferably contain 2,500 to 50,000 filaments per fiber bundle. If the number of filaments is less than 2,500, the fibers may be easily caused to meander, leading to a decrease in strength. If the number of filaments is more than 50,000, resin impregnation may be difficult to perform during prepreg preparation or during molding. The number of filaments is more preferably in the range of 2,800 to 40,000.

The prepreg according to the present invention is produced by impregnating the aforementioned reinforcement fiber with the aforementioned epoxy resin composition. In the prepreg, the fiber content is preferably 40 to 90 parts by mass, more preferably 50 to 80 parts by mass. If the mass fraction of the fiber is too small, the resulting composite material will be too heavy and the advantage of the fiber-reinforced composite material having high specific strength and specific modulus will be impaired in some cases, while if the mass fraction of the fiber is too large, impregnation with the resin composition will not be achieved sufficiently and the resulting composite material will suffer from many voids, possibly leading to large deterioration in mechanical characteristics.

The prepreg according to the present invention preferably has a structure in which a particle-rich layer, that is, a layer in which localized existence of the aforementioned thermoplastic resin particles [F] is clearly confirmed in observed cross sections (hereinafter, occasionally referred to as particle layer), is formed near the surfaces of the prepreg.

If this structure is present, carbon fiber-reinforced composite material produced by stacking such prepreg plates and curing the epoxy resin composition will have a configuration in which a resin layer consisting of matrix resin formed of the components [A] to [E] and the thermoplastic resin particles [F] contained in the former is disposed between the layers that originate from the prepreg plates before curing. The matrix resin formed of the components [A] to [E] is highly adhesive to the reinforcement fiber and also high in elasticity and toughness, and accordingly, cracks in the matrix resin formed of the components [A] to [E] under mode I interlaminar toughness test will be prevented from propagating in the interior of the layers. Accordingly, the cracks continue to propagate in the resin layer, and consequently, advance through

the thermoplastic resin particles [F], leading to the development of high mode I toughness as result of a synergy effect.

From this point of view, the aforementioned particle layer preferably exists in the depth range accounting for 20%, more preferably 10%, of the total (100%) thickness of the prepreg, measured from each surface of the prepreg in the thickness direction. Furthermore, the particle layer may exist only at one side, but cautions are necessary because the prepreg will have two surfaces with different features. If interlaminar regions containing particles and those free of particles exist as a result of stacking prepreg plates in an inappropriate way by mistake, the resulting composite material will have poor interlaminar toughness. It is preferable that a particle layer exists at each side of the prepreg for allowing the prepreg to have two identical surfaces and making the stacking operation easy.

Furthermore, the proportion of thermoplastic resin particles existing in the particle layers is preferably 90 to 100 parts by mass, more preferably 95 to 100 parts by mass, of the total 100 parts by mass of the thermoplastic resin particles existing in the prepreg.

This proportion of existing particles can be evaluated by, for instance, the undermentioned method. Specifically, a prepreg plate is interposed between two polytetrafluoroethylene resin plates having smooth surfaces and brought into close contact with them, and then the temperature is increased gradually for 7 days up to a curing temperature to ensure gelation and curing, thus producing a cured prepreg plate. In each surface region of the prepreg plate, a line parallel to the surface of the prepreg plate is drawn at a depth equal to 20% of the thickness. Then, the total area of the particles existing between each surface of the prepreg plate and each of the lines drawn above and the total area of the particles existing across the entire thickness of the prepreg are determined, followed by calculating the proportion of the area of the particles existing in the regions of 20% depth from the prepreg surfaces to the total area of the particles existing across the entire (100%) thickness of the prepreg plate. Here, the total area of the particles is determined by cutting the particle portions out of a cross-sectional photograph and converting their mass. When it is found difficult to distinguish particles dispersed in the resin in the photograph, the particles may be dyed and rephotographed.

The prepreg according to the present invention can be produced by applying methods as disclosed in Japanese Unexamined patent Publication JP-H01-26651A, Japanese Unexamined patent Publication JP-S63-170427A, or Japanese Unexamined patent Publication JP-S63-170428A. Specifically, the prepreg according to the present invention can be produced by a method in which the surface of primary prepreg consisting of carbon fibers and an epoxy resin, i.e., matrix resin, is coated with thermoplastic resin particles, which are simply in the form of particles, a method in which a mixture of these particles mixed uniformly in epoxy resin, i.e., matrix resin, is prepared and used to impregnate carbon fiber, and during this impregnation process, reinforcement fibers are located so that they act to prevent the penetration of these particles to ensure localized existence of particles in the prepreg's surface regions, and a method in which primary prepreg is prepared in advance by impregnating carbon fibers with an epoxy resin, and a thermosetting resin film containing these particles at a high concentration is bonded over the surfaces of the primary prepreg. The uniform existence of thermoplastic resin particles in the region of 20% depth from the prepreg surface serves to produce prepreg for fiber composite material production having high interlaminar toughness.

There are no specific limitations on the shape of the reinforcement fiber, which may be, for example, in the form of long fiber paralleled in one direction, tow, woven fabric, mat, knit, or braid. For applications that require high specific strength and specific modulus, in particular, the most suitable is a unidirectionally paralleled arrangement of reinforcement fiber, but cloth-like (woven fabric) arrangement is also suitable for the present invention because of easy handling.

The prepreg according to the present invention can be produced by some different methods including a method in which the epoxy resin composition used as matrix resin is dissolved in a solvent such as methyl ethyl ketone and methanol to produce a solution with a decreased viscosity, and then used to impregnate reinforcement fiber (wet method), and a hot melt method in which the matrix resin is heated to decrease its viscosity and then used to impregnate reinforcement fiber (dry method).

The wet method includes the steps of immersing reinforcement fiber in a solution of epoxy resin composition, that is, matrix resin, pulling it out, and evaporating the solvent, whereas the hot melt method (dry method) includes the steps of heated epoxy resin composition low viscosity direct impregnated reinforcement fiber, or the steps of coating release paper or the like with the epoxy resin composition to prepare a film, attaching the film to cover either or both sides of a reinforcement fiber sheet, and pressing them under heat so that the reinforcement fiber is impregnated with the resin. The hot melt is preferred for the present invention because the resulting prepreg will be substantially free of residual solvent.

The resulting prepreg plates are stacked and the laminate is heated under pressure to cure the matrix resin, thereby providing the fiber-reinforced composite material according to the present invention.

Here, the application of heat and pressure is carried out by using an appropriate method such as press molding, autoclave molding, bagging molding, wrapping tape molding, and internal pressure molding.

The fiber-reinforced composite material according to the present invention can be produced by a prepreg-free molding method in which reinforcement fiber is directly impregnated with the epoxy resin composition, followed by heating and curing, such as hand lay up molding, filament winding, pultrusion, resin injection molding, and resin transfer molding.

For these methods, it is preferable that two liquids, that is, a base resin formed of epoxy resin and an epoxy resin curing agent, are mixed to prepare an epoxy resin composition immediately before use.

Fiber-reinforced composite material containing the epoxy resin composition according to the present invention as matrix resin are used favorably for producing sports goods, aircraft members, and general industrial products. More specifically, their preferred applications in the aerospace industry include primary structural members of aircraft such as main wing, tail unit, and floor beam; secondary structural members such as flap, aileron, cowl, fairing, and other interior materials, and structural members of artificial satellites such as rocket motor case. Of these aeronautical and aerospace applications, primary structural members of aircraft, including body skin and main wing skin, that particularly require high interlaminar toughness and impact resistance we well as high tensile strength at low temperatures to resist the coldness during a high-altitude flight represent particularly suitable applications of the fiber-reinforced composite material according to the present invention. Furthermore, the aforementioned sports goods include golf shaft, fishing pole, rackets for tennis, badminton, squash, etc., hockey stick, and skiing pole. The aforementioned general industrial applications include structural members of vehicles such as automobile, ship, and railroad vehicle; and civil engineering and construction materials such as drive shaft, plate spring, windmill blade, pressure vessel, flywheel, roller for paper manufacture, roofing material, cable, reinforcing bar, and mending/reinforcing materials.

Examples

The epoxy resin composition, prepreg, and fiber-reinforced composite material according to the present invention are described in more detail below with reference to Examples. Described below are the resin material preparation methods and evaluation methods used in Examples. Preparation and evaluation of prepreg samples in Examples were performed in an atmosphere with a temperature of 25° C±2° C and relative humidity of 50% unless otherwise specified.

<Epoxy resin>

<Bifunctional amine type epoxy resin [A]>

N,N-diglycidyl-4-phenoxy aniline synthesized by the method described below.
In a four-necked flask equipped with a thermometer, dropping funnel, cooling pipe, and stirring device, 610.6 g (6.6 mol) of epichlorohydrin was fed and heated to a temperature of 70°C while performing nitrogen purge, and then a solution prepared by dissolving 203.7 g (1.1 mol) of p-phenoxy aniline in 1,020 g of ethanol was added by continuing its dropping for 4 hours. The solution was stirred for additional 6 hours to complete the addition reaction to produce 4-phenoxy-N,N-bis(2-hydroxy-3-chloropropyl) aniline. Subsequently, the flask was cooled to an internal temperature of 25°C, and 229 g (2.75 mol) 48% NaOH aqueous solution was added by 2-hour dropping, followed by stirring for 1 hour. After the completion of the cyclization reaction, ethanol was evaporated, followed by extraction with 408 g of toluene and washing with 5% salt solution twice. Toluene and epichlorohydrin were removed from the organic layer under reduced pressure to provide 308.5 g (yield 94.5%) of a brown viscous liquid. N,N-diglycidyl-4-phenoxy aniline, that is, the main product, was obtained with a purity of 91% (GCarea%).

- GOT (diglycidyl toluidine, manufactured by Nippon Kayaku Co., Ltd.)

<Tetrafunctional amine type epoxy resin [B]>

- ELM434 (tetraglycidyl diaminodiphenyl methane, manufactured by Sumitomo Chemical Co., Ltd.)
- Araldite (registered trademark) MY721 (tetraglycidyl diaminodiphenyl methane, manufactured by Huntsman Advanced Materials Gmbh).

<Bisphenol F type epoxy resin with an epoxy equivalent of 450 to 4,500 [C]>

- Epotohto (registered trademark) YDF-2001 (bisphenol F type epoxy resin, manufactured by Nippon Steel Chemical Co., Ltd., epoxy equivalent 475)
- jER (registered trademark) 4004P (bisphenol F type epoxy resin, manufactured by Mitsubishi Chemical Corporation, epoxy equivalent 880)
- jER (registered trademark) 4010P (bisphenol F type epoxy resin, manufactured by Mitsubishi Chemical Corporation,

epoxy equivalent 4,400)

(Epoxy resin components other than [A] to [C])

- EPON (registered trademark) 825 (bisphenol A type epoxy resin, manufactured by Mitsubishi Chemical Corporation)
- Epicron (registered trademark) N-695 (cresol novolac type epoxy resin, manufactured by DIC)
- Epikote (registered trademark) YX4000H (epoxy resin with biphenyl backbone, manufactured by Mitsubishi Chemical Corporation)

<Aromatic amine curing agent [D]>

- 3,3'-DAS (3,3'-diaminodiphenyl sulfone, manufactured by Mitsui Fine Chemical, Inc.)
- Seikacure (registered trademark) -S (4,4'-diaminodiphenyl sulfone, manufactured by Wakayama Seika Kogyo Co., Ltd.)

<Block copolymer [E] and others>

(Block copolymer with a reactive group able to react with epoxy resin [E])

- Nanostrength (registered trademark) SM4032XM10 (M-B-M type block copolymer [E] where B denotes butyl acrylate (Tg: -54°C) and M denotes a random copolymer chain composed of methyl methacrylate and carboxyl-containing acrylic monomer, manufactured by Arkema K.K.)
- (MMA-GMA)-EHMA {poly(methyl methacrylate -ran- glycidylmethacrylate) -block-poly(2-ethylhexyl methacrylate), weight fraction of (MMA-GMA) block = 0.22, mole fraction of glycidylmethacrylate in (MMA-GMA) block = 0.4, Mn = 25,500 g/mol}
  Synthesized according to the description in Methacrylate Block Copolymers through Metal-Mediated Living Free-Radical Polymerization for Modification of Termosetting Epoxy, R. B. Grubbs. J. M. Dean, and F. S. Bates, Macromolecules, Vol. 34, p. 8,593 (2001)
- (MA-AA)-BA {poly (methyl acrylate-ran-acrylic acid) -block- poly(butyl acrylate), weight fraction of (MA-AA) block = 0.24, mole fraction of acrylic acid in (MA-AA) block = 0.05, Mn = 78,100 g/mole}

Living first block of poly(methyl acrylate-ran-acrylic acid) was prepared from alkoxy amine, Bloc Builder (iBA-DEPN). iBA-DEPN was added to a mixture of methyl acrylate and acrylic acid and heated to 110 to 120°C in a nitrogen atmosphere to promote the polymerization to achieve a conversion degree of 60 to 90%. The resulting polymer was diluted with a butyl acrylate monomer, and the residual methyl acrylate was evaporated in a vacuum at 50 to 60°C. Toluene was added, and heating was performed in a nitrogen atmosphere at 110 to 120°C to promote the polymerization of the second block to a conversion degree of 60 to 90%. The solvent and the remaining monomer were removed in a vacuum to provide a block copolymer.

(Block copolymer free of reactive group able to react with epoxy resin)

- Nanostrength (registered trademark) M22N (M-B-M type block copolymer where B denotes butyl acrylate (Tg: -54°C) and M denotes a random copolymer chain containing methyl methacrylate and polar acrylic monomer, supplied by Arkema K.K.)

<Thermoplastic resin particles [F]>

- Toraypearl (registered trademark) TN (manufactured by Toray Industries, Inc., average particle diameter 13.0 μm)

(1) Preparation of epoxy resin composition

In a kneader, predetermined quantities of epoxy resin components [A] to [C] and a block copolymer with a reactive group that can react with epoxy resin [E] were fed and heated to 160°C while kneading, followed by additional kneading at 160°C for 1 hour to produce a transparent viscous liquid. After cooling to 80°C while kneading, predetermined quantities of an aromatic amine curing agent [D] and thermoplastic resin particles insoluble in epoxy resin [F] were added and kneaded further to produce an epoxy resin composition.

(2) Measurement of bending elastic modulus of cured resin

The epoxy resin composition prepared in section (1) above was deaerated in a vacuum and injected in a mold which was set up so that the thickness would be 2 mm by means of a 2 mm thick Teflon (trademark) spacer. Curing was performed at a temperature of 180°C for 2 hours to provide a cured resin with a thickness of 2 mm. Then, the resulting cured resin plate was cut to prepare a test piece with a width of 10 mm and length of 60 mm, and it was subjected to three-point bending test with a span of 32 mm, followed by calculation of the bending elastic modulus according to JIS K7171-1994.

(3) Measurement of toughness ($K_{IC}$) of cured resin

The resin composition prepared in section (1) above was deaerated in a vacuum and injected in a mold which was set up so that the thickness would be 6 mm by means of a 6 mm thick Teflon (trademark) spacer, followed by curing at a temperature of 180°C for 2 hours to provide a cured resin with a thickness of 6 mm. This cured resin was cut to prepare a test piece with a size of 12.7 × 150 mm. Using an Instron type universal tester (manufactured by Instron Corporation), the test piece was processed and tested according to ASTM D5045 (1999). An initial precrack was introduced in the test piece by putting the edge of a blade cooled to the liquid nitrogen temperature on the test piece and giving an impact to the razor using a hammer. The toughness of a cured resin referred to herein means the critical stress intensity factor for mode I (opening-mode) deformation.

(4) Measurement of glass transition temperature

From the cured resin plate prepared in section (2) above, 7 mg of the cured resin was taken and subjected to measurement at a heating rate 10°C/min in the temperature range from 30°C to 350°C using DSC2910 (model) equipment manufactured by TA Instruments. The midpoint temperature determined according to JIS K7121-1987 was assumed to represent the glass transition temperature Tg and used for heat resistance evaluation.

(5) Measurement of the size of phase separation structures

The epoxy resin composition prepared in section (1) above was deaerated in a vacuum, subjected to measurement at a heating rate of 1.5°C/min in the temperature range from 30°C to 180°C, and cured at a temperature of 180°C for 2 hours to produce cured resin. The cured resin was dyed, sliced into a thin section, and examined by transmission electron microscopy (TEM) under the following conditions to provide a transmission electron microscopic image. As the dyeing agent, either $OsO_4$ or $RuO_4$ suitable for the resin composition was selected to ensure an adequate contrast to permit easy morphological examination.

- Equipment: H-7100 transmission electron microscope (manufactured by Hitachi, Ltd.)
- Accelerating voltage: 100 kV
- Magnification: 10,000

Based on this examination, the structural period of the epoxy resin rich phase and the component [E] (block copolymer with a reactive group that can react with epoxy resin) rich phase was analyzed. Depending on the types and proportions of the epoxy resin and component [E], the cured product may have bicontinuous phase type phase separation structures or sea-island type phase separation configuration, which were examined as described below.

In the case of a bicontinuous phase, straight lines with predetermined lengths are drawn on a microscopic photograph, and the intersections between the straight lines and the phase-to-phase interfaces are determined. Then, the distance between each pair of adjacent intersections is measured and the number average of all distance measurements is taken to represent the structural period. Such lines with predetermined lengths are taken as follows on the basis of microscopic photographs. For a specimen with an assumed structural period of the order of 10 nm (10 nm or more and less than 100 nm), a photograph was taken at a magnification of 20,000 times and three 20 mm lines (1 μm

length on the specimen) were selected randomly on the photograph. Similarly, for a specimen with an assumed structural period of the order of 100 nm (100 nm or more and less than 1 μm), a photograph was taken at a magnification of 2,000 times and three 20 mm lines (10 μm length on the specimen) were selected randomly on the photograph. For a specimen with an assumed structural period of the order of 1 μm (1 μm or more and less than 10 μm), a photograph was taken at a magnification of 200 times and three 20 mm lines (100 μm length on the specimen) were selected randomly on the photograph. If the measured structural period was largely different from the expected range, other areas where the specimen was expected to be in the assumed range were examined to provide adoptable value.

For a sea-island configuration, all the island phase regions in predetermined areas were examined and the number average of their major axis measurements was assumed to represent the diameter of the island phase regions. In respect to the "predetermined areas" in a specimen that was expected to have an island phase diameter of less than 100 nm from the image obtained, a photograph was taken at a magnification of 20,000 times and three 20 mm square areas (1 μm square areas on the specimen) were selected randomly on the photograph. Similarly, for a specimen with an assumed island phase diameter of the order of 100 nm (100 nm or more and less than 1 μm), a photograph was taken at a magnification of 2,000 times and three 20 mm square areas (10 μm square areas on the specimen) were selected randomly on the photograph. For a specimen with an assumed island phase diameter of the order of 1 μm (1 μm or more and less than 10 μm), a photograph was taken at a magnification of 200 times and three 20 square areas (100 μm square areas on the specimen) were selected randomly on the photograph. If the measured island phase diameter was largely different from the expected range, other areas where the specimen was expected to be in the assumed diameter range were examined to provide adoptable value.

(6) Evaluation of variation in size of phase separation structures

The epoxy resin composition prepared in section (1) above was deaerated in a vacuum, subjected to measurement at a heating rate 1.5°C/min or 5°C/min in the temperature range from 30°C to 180°C, and cured at a temperature of 180°C for 2 hours to provide cured resin samples produced under different conditions. A transmission electron microscopic image was taken according to the method described in section (5) above and used to determine the size of the phase separation structure, followed by calculation of the variation in the size of the phase separation structure by the following equation.

Variation (%) = {(size of phase separation structures prepared by heat-molding at 5°C/min)/(size of phase separation structures prepared by heat-molding at 1.5°C/min) - 1)} × 100

(7) Preparation of prepreg

The epoxy resin composition prepared in section (1) above was spread over a piece of release paper with a knife coater to prepare a resin film. Then, carbon fibers of Torayca (registered trademark) T800G-24K-31E manufactured by Toray Industries, Inc. were paralleled in one direction to form a sheet, and two resin films were used to cover both sides of the carbon fiber sheet and pressed under heat to impregnate the carbon fiber sheet with the resin to provide a unidirectional prepreg in which the carbon fiber basis weight was 190 g/m$^2$ and the weight fraction of the matrix resin containing thermoplastic resin particles was 35.5%. In doing this, two-step impregnation was carried out as described below to produce prepreg plates in which resin particles were extremely localized near the surface.

First, primary prepreg that was free of thermoplastic resin particles was prepared. Of the component materials listed in Tables 1 and 2, an epoxy resin composition free of the thermoplastic resin particles insoluble in epoxy resin [F] was prepared by the procedure described in section (1) above. This epoxy resin composition for primary prepreg was spread over a piece of release paper with a knife coater to provide a resin film this primary prepreg with a basis weight of 30 g/m$^2$, which corresponds to 60 parts by mass of the normal value. Then, carbon fibers of Torayca (registered trademark) T800G-24K-31E manufactured by Toray Industries, Inc. was paralleled in one direction to form a sheet, and two resin films for primary prepreg were used to cover both sides of the carbon fiber sheet and pressed under heat using heating rollers at a temperature of 100°C and an air pressure of 1 atm to impregnate the carbon fibers with the resin to provide primary prepreg.

To prepare resin films for two-step impregnation, the procedure described in section (1) above was carried out to produce, by using a kneader, an epoxy resin composition containing the thermoplastic resin particles insoluble in epoxy resin [F], which is among the component materials listed in Tables 1 and 2, in a quantity 2.5 times the specified value. This epoxy resin composition for two-step impregnation was spread over a piece of release paper with a knife coater to provide a resin film for two-step impregnation with a basis weight of 20 g/m$^2$, which corresponds to 40 parts by mass of the normal value. Such films were used to sandwich a primary prepreg plate and pressed under heat using heating rollers at a temperature of 80°C and an air pressure of 1 atm to provide prepreg in which resin particles were

extremely localized near the surface. The use of this two-step impregnation process serves to produce prepreg in which resin particles are extremely localized near the surface although as a whole the epoxy resin composition constituting the prepreg contains the same quantity of resin particles as that specified in the particle content list in Tables 1 and 2.

(8) Proportion of particles existing in the surface region with a depth accounting for 20% of the prepreg thickness

The unidirectional prepreg prepared in section (7) above is interposed between two polytetrafluoroethylene resin plates with smooth surfaces and brought into close contact, and then the temperature is increased gradually for 7 days up to 150°C to ensure gelation and curing, thus producing a cured resin plate. After the completion of curing, the cured plate was cut in a direction perpendicular to the contact interface, and the cross section was polished and photographed with an optical microscope at a magnification of 200 or more in such a manner that the upper and lower surfaces of the prepreg were included in the field of view. According to the same procedure, the distance between the polytetrafluoroethylene resin plates was measured at five points aligned in the lateral direction in the cross-sectional photograph, and the average (n=5) was calculated to represent the thickness of the prepreg. For each of the two surfaces of the prepreg, a line parallel to the surface of the prepreg was drawn at a depth equal to 20% of the thickness. Then, the total area of the particles existing between each surface of the prepreg and each of the lines drawn above and the total area of the particles existing across the entire thickness of the prepreg were determined, followed by calculating the proportion of the number of particles existing in the regions of 20% depth from the prepreg surfaces to the total number of particles existing across the entire (100%) thickness of the prepreg. Here, the total area of the fine particles was determined by cutting the particle portions out of a cross-sectional photograph and converting their mass.

(9) Preparation of plates of composite material for mode I interlaminar toughness ($G_{IC}$) test and $G_{IC}$ measurement

By the following procedure from (a) to (e), plates of composite material for mode I interlaminar toughness ($G_{IC}$) were prepared according to JIS K7086 (1993).

(a) A total of 20 unidirectional prepreg plates prepared in section (7) above were laminated together with the fibers aligned in one direction. A fluorine resin film with a width of 40 mm and a thickness of 12 μm was interposed at the center of the laminate (between the 10th ply and the 11th ply) in such a manner that its direction was perpendicular to the aligned fibers.

(b) The laminated prepreg plates were covered with a nylon film without leaving gaps, and cured by pressing under heat in an autoclave at 180°C and an internal pressure of 588 kPa for 2 hours to form a unidirectional fiber-reinforced composite material.

(c) The unidirectional fiber-reinforced composite material obtained in step (b) was cut to a width of 20 mm and a length of 195 mm. Cutting was performed so that the fibers were parallel to the length direction of the specimen.

(d) According to JIS K7086 (1993), a block (aluminum, length 25 mm) for pin load application was attached to an end (where the film was located) of the specimen.

(e) White paint was applied to both side faces of the specimen to ensure easy observation of the propagation of cracking.

The composite material plate prepared above was used to make $G_{IC}$ measurements by the following procedure.

Test was carried out using an Instron type universal tester (manufactured by Instron Corporation) according to Appendix 1 of JIS K7086 (1993). The crosshead speed was 0.5 mm/min before the length of the crack reached 20 mm and 1 mm/min after it reached 20 mm. The $G_{IC}$ ($G_{IC}$ at the initial point of cracking) that corresponds to the critical load at the initial point of cracking was calculated from the load, displacement, and crack length according to JIS K7086 (1993).

(10) Evaluation of crack propagation behavior

Using a diamond cutter, the specimen after undergoing the $G_{IC}$ test in section (9) above was cut in a direction parallel to the side face of the specimen and the cut face was polished smoothly with a buffing machine. Such polished specimens were prepared from 10 arbitrarily selected positions, and the crack propagation behavior over a 10 mm path from the starting point of initial cracking was observed by optical microscopy. A sample is represented by ○ if cracking has propagated to the end of the interlaminar region in 9 or more of the 10 specimens, Δ if the number is in the range of 2 to 8, and × if the number is 1 or less.

(Example 1)

In a kneading machine, 5 parts by mass of N,N-diglycidyl-4-phenoxy aniline (bifunctional amine type epoxy resin [A]), 60 parts by mass of ELM434 (tetrafunctional amine type epoxy resin [B]), 25 parts by mass of YDF2001 (bisphenol F type epoxy resin with an epoxy equivalent of 450 to 4,500 [C]), 10 parts by mass of EPON825 (epoxy resin other than [A] to [C]), and 7 parts by mass of SM4032XM10 (block copolymer with a reactive group that can react with epoxy resin [E]) are kneaded, and subsequently, 35 parts by mass of 3,3'-DAS, used as the aromatic amine curing agent [D], and 20 parts by mass of Toraypearl TN, used as the thermoplastic resin particles insoluble in epoxy resin [F], were kneaded to prepare an epoxy resin composition. Table 1 lists the components and proportions (figures in Table 1 are in parts by mass). The resulting epoxy resin composition was subjected to (2) Measurement of bending elastic modulus of cured resin, (3) Measurement of toughness ($K_{IC}$) of cured resin, (4) Measurement of glass transition temperature, (5) Measurement of the size of phase separation structures, and (6) Evaluation of variation in size of phase separation structures as described above to determine the bending elastic modulus of the cured resin, $K_{IC}$, glass transition temperature, size of the phase separation structure, and variation in size of phase separation structures under different molding conditions of the cured resin. Then, the prepreg obtained was subjected to the measurement of (8) Proportion of particles existing in the surface region with a depth equal to 20% of the prepreg thickness, (9) Preparation of plates of composite material for mode I interlaminar toughness ($G_{IC}$) test and $G_{IC}$ measurement, and (10) Evaluation of crack propagation behavior as described above, and evaluations were carried out for $G_{IC}$ and crack propagation behavior. Results are given in Table 1.

(Comparative example 1)

One hundred (100) parts by mass of ELM434 (tetrafunctional amine type epoxy resin [B]) and 7 parts by mass of M22N (block copolymer free of reactive group that can react with epoxy resin) were kneaded in a kneading machine, but dissolution did not take place. Results are given in Table 2.

(Examples 2 to 10 and Comparative examples 2 to 12)

Except that the epoxy resin, block copolymer, curing agent, and thermoplastic resin particles specified in Tables 1 and 2 were used in the specified quantities, the same procedure as in Example 1 was carried out to produce an epoxy resin composition. The resulting epoxy resin composition was subjected to (2) Measurement of bending elastic modulus of cured resin, (3) Measurement of toughness ($K_{IC}$) of cured resin, (4) Measurement of glass transition temperature, (5) Measurement of the size of phase separation structures, and (6) Evaluation of variation in size of phase separation structures as described above to determine the bending elastic modulus of the cured resin, $K_{IC}$, glass transition temperature, size of the phase separation structure, and variation in size of phase separation structures under different molding conditions of the cured resin. Then, the prepreg obtained was subjected to the measurement of (8) Proportion of particles existing in the surface region with a depth equal to 20% of the prepreg thickness, (9) Preparation of plates of composite material for mode I interlaminar toughness ($G_{IC}$) test and $G_{IC}$ measurement, and (10) Evaluation of crack propagation behavior as described above, and evaluations were carried out for $G_{IC}$ and crack propagation behavior. Results are shown in Tables 1 and 2.

[Table 1 - examples 1-5]

| | Example 1 | Example 2 | Example 3 | Example 4 | Example 5 |
|---|---|---|---|---|---|
| Bifunctional amine type epoxy resin [A] | | | | | |
| • N,N-diglycidyl-4-phenoxy aniline | 5 | 20 | 35 | 30 | 20 |
| • GOT | | | | | |
| Tetrafunctional amine type epoxy resin [B] | | | | | |
| • ELM434 | 60 | 40 | 15 | 40 | 35 |
| • MY721 | | | | | |
| Bisphenol F type epoxy resin [C] with epoxy equivalent of 450 to 4,500 | | | | | |
| • YDF-2001 | 25 | 15 | 20 | 5 | |
| • jER4004P | | | | | 25 |

(continued)

| | Example 1 | Example 2 | Example 3 | Example 4 | Example 5 |
|---|---|---|---|---|---|
| • jER4010P | | | | | |
| (epoxy resin other than [A] to [C]) | | | | | |
| • jER630 | | | | | |
| • EPON825 | 10 | 10 | | 5 | 10 |
| • N-695 | | 15 | 30 | 20 | |
| • YX4000H | | | | | 10 |
| Block copolymer ([E] etc.) | | | | | |
| (block copolymer with reactive group able to react with epoxy resin [E]) | | | | | |
| • block copolymer SM4032XM10 | 7 | 7 | 7 | 7 | 7 |
| • block copolymer (MMA-GMA)-EHMA | | | | | |
| • block copolymer (MA-AA)-BA | | | | | |
| (block copolymer free of reactive group able to react with epoxv resin) | | | | | |
| • block copolymer M22N | | | | | |
| Aromatic amine curing agent ([D]) | | | | | |
| • 3,3'-DAS | 35 | 35 | 30 | 35 | 30 |
| • Seikacure-S | | | | | |
| Thermoplastic resin particles insoluble in epoxy resin ([F]) | | | | | |
| • Toraypearl TN | 20 | 20 | 20 | 20 | 20 |
| Characteristics of cured resin | | | | | |
| • bending elastic modulus (MPa) | 3.9 | 4.2 | 4.1 | 4.3 | 3.7 |
| • $K_{IC}$ (MPa•$m^{0.5}$) | 1.4 | 1.4 | 1.3 | 1.1 | 1.5 |
| • glass transition temperature (°C) | 181 | 193 | 187 | 202 | 171 |
| • heat-molded at 1.5°C/min: phase separation structure size (μm) | 0.04 | 0.04 | 0.03 | 0.09 | 0.04 |
| • heat-molded at 5°C/min: phase separation structure size (μm) | 0.04 | 0.04 | 0.03 | 0.10 | 0.04 |
| • variation in phase separation structure size (%) | 5 | 3 | 1 | 10 | 5 |
| Characteristics of prepreg and fiber-reinforced composite material | | | | | |
| • proportion of particles present in 20% depth surface range (%) | 97 | 98 | 96 | 97 | 98 |
| • $G_{IC}$(J/$m^2$) | 660 | 680 | 620 | 570 | 650 |
| • crack propagating behavior | ○ | ○ | ○ | ○ | ○ |

[Table 1 - examples 6-10]

| | Example 6 | Example 7 | Example 8 | Example 9 | Example 10 |
|---|---|---|---|---|---|
| Bifunctional amine type epoxy resin [A] | | | | | |
| • N,N-diglycidyl-4-phenoxy aniline | 15 | | 30 | 30 | 20 |
| • GOT | | 25 | | | |
| Tetrafunctional amine type epoxy resin [B] | | | | | |
| • ELM434 | | 25 | 50 | 50 | 40 |
| • MY721 | 45 | | | | |
| Bisphenol F type epoxy resin [C] with epoxy equivalent of 450 to 4,500 | | | | | |
| • YDF-2001 | 10 | 20 | 10 | 10 | |
| • jER4004P | | | | | |
| • jER4010P | | | | | 15 |
| (epoxy resin other than [A] to [C]) | | | | | |
| • jER630 | | | | | |
| • EPON825 | 10 | 10 | 10 | 10 | 10 |
| • N-695 | 20 | 20 | | | |
| • YX4000H | | | | | |
| Block copolymer ([E] etc.) | | | | | |
| (block copolymer with reactive group able to react with epoxy resin [E]) | | | | | |
| • block copolymer SM4032XM10 | 3 | 13 | | | 7 |
| • block copolymer (MMA-GMA)-EHMA | | | 7 | | |
| • block copolymer (MA-AA)-BA | | | | 7 | |
| (block copolymer free of reactive group able to react with epoxy resin) | | | | | |
| • block copolymer M22N | | | | | |
| Aromatic amine curing agent ([D]) | | | | | |
| • 3,3'-DAS | 35 | 30 | 40 | 40 | 35 |
| • Seikacure-S | | | | | |
| Thermoplastic resin particles insoluble in (epoxy resin ([F]) | | | | | |
| • Toraypearl TN | 20 | 20 | 20 | 20 | 20 |
| Characteristics of cured resin | | | | | |
| • bending elastic modulus (MPa) | 4.3 | 3.7 | 4.2 | 4.3 | 4.1 |
| • $K_{IC}$ ($MPa \cdot m^{0.5}$) | 1.1 | 1.6 | 1.1 | 1.2 | 1.5 |
| • glass transition temperature (°C) | 196 | 176 | 194 | 191 | 170 |
| • heat-molded at 1.5°C/min: phase separation structure size (μm) | 0.06 | 0.07 | 0.16 | 0.05 | 0.07 |
| • heat-molded at 5°C/min: phase separation structure size (μm) | 0.06 | 0.08 | 0.18 | 0.05 | 0.09 |

(continued)

| | Example 6 | Example 7 | Example 8 | Example 9 | Example 10 |
|---|---|---|---|---|---|
| • variation in phase separation structure size (%) | 4 | 9 | 14 | 1 | 30 |
| Characteristics of prepreg and fiber-reinforced composite material | | | | | |
| • proportion of particles present in 20% depth surface range (%) | 97 | 97 | 97 | 96 | 97 |
| • $G_{IC}$ ($J/m^2$) | 580 | 670 | 570 | 590 | 640 |
| • crack propagating behavior | ○ | ○ | ○ | ○ | ○ |

[Table 2 - examples 1-6]

| | Comparative example 1 | Comparative example 2 | Comparative example 3 | Comparative example 4 | Comparative example 5 | Comparative example 6 |
|---|---|---|---|---|---|---|
| Bifunctional amine type epoxy resin [A] | | | | | | |
| • N,N-diglycidyl-4-phenoxy aniline | | 20 | 20 | | 25 | 70 |
| • GOT | | | | | | |
| Tetrafunctional amine type epoxy resin [B] | | | | | | |
| • ELM434 | 100 | 30 | 25 | | | 10 |
| • MY721 | | | | 30 | | |
| Bisphenol F type epoxy resin [C] with epoxy equivalent of 450 to 4.500 | | | | | | |
| • YDF-2001 | | 15 | 20 | 25 | 20 | |
| • jER4004P | | | | | | |
| • jER4010P | | | | | | |
| (epoxy resin other than [A] to [C] | | | | | | |
| • jER630 | | | | | | |
| • EPON825 | | 10 | 10 | 25 | 55 | |
| • N-695 | | 25 | 25 | 20 | | 20 |
| • YX4000H | | | | | | |
| Block copolymer ([E] etc.) | | | | | | |
| (block copolymer with a reactive group able to react with epoxy resin [E]) | | | | | | |
| • block copolymer SM4032XM10 | | | | 7 | 7 | 7 |
| • block copolymer (MMA-GMA)-EHMA | | | | | | |
| • block copolymer (MA-AA)-BA | | | | | | |
| (block copolymer free of reactive group able to react with epoxy resin) | | | | | | |
| • block copolymer M22N | 7 | 7 | | | | |

(continued)

| | Comparative example 1 | Comparative example 2 | Comparative example 3 | Comparative example 4 | Comparative example 5 | Comparative example 6 |
|---|---|---|---|---|---|---|
| Aromatic amine curing agent ([D]) | | | | | | |
| • 3,3'-DAS | 45 | 30 | 30 | 30 | 30 | 35 |
| • Seikacure-S | | | | | | |
| Thermoplastic resin particles insoluble in epoxy resin ([F]) | | | | | | |
| • Toraypearl TN | 20 | 20 | 20 | 20 | 20 | 20 |
| Characteristics of cured resin | | | | | | |
| • bending elastic modulus (MPa) | - | 3.3 | 3.9 | 3.6 | 2.9 | 4.4 |
| • $K_{IC}$ (MPa•$m^{0.5}$) | - | 0.9 | 0.8 | 1.5 | 1.9 | 0.7 |
| • glass transition temperature (°C) | - | 182 | 180 | 163 | 145 | 215 |
| • heat-molded at 1.5°C/min: phase separation structure size (μm) | - | 8 | - | 0.04 | 0.03 | 0.05 |
| • heat-molded at 5°C/min: phase separation structure size (μm) | - | 22 | - | 0.04 | 0.03 | 0.06 |
| • variation in phase separation structure size (%) | - | 28 | - | 5 | 2 | 11 |
| Characteristics of prepreg and | | | | | | |
| fiber-reinforced composite material | | | | | | |
| • proportion of particles present in 20% depth surface range (%) | - | 97 | 96 | 97 | 98 | 97 |
| • $G_{IC}$ (J/$m^2$) | - | 480 | 440 | 480 | 550 | 420 |
| • crack propagating behavior | - | Δ | × | ○ | ○ | Δ |

[Table 2 -examples 7-12]

| | Comparative example 7 | Comparative example 8 | Comparative example 9 | Comparative example 10 | Comparative example 11 | Comparative example 12 |
|---|---|---|---|---|---|---|
| Bifunctional amine type epoxy resin [A] | | | | | | |
| •N,N-diglycidyl-4-phenoxy aniline | | | 30 | 20 | 20 | 20 |
| •GOT | 20 | | | | | |
| Tetrafunctional amine type epoxy resin [B] | | | | | | |
| •ELM434 | | 30 | 20 | 30 | | 40 |
| •MY721 | 40 | | | | | |
| Bisphenol F type epoxy resin [C] with epoxy equivalent of 450 to 4,500 | | | | | | |
| •YDF-2001 | | | 15 | 15 | 15 | 15 |
| •jER4004P | 40 | | | | | |
| •jER4010P | | | | | | |
| (epoxy resin other than [A] to [C]) | | | | | | |
| •jER630 | | | | | 40 | |
| •EPON825 | | 20 | 10 | 10 | 10 | 10 |
| •N-695 | | | 25 | 25 | 15 | 15 |
| •YX4000H | | 50 | | | | |
| Block copolymer ([E] etc.) | | | | | | |
| (block copolymer with a reactive group able to react with epoxy resin | | | | | | |
| •block copolymer SM4032XM10 | 7 | 7 | 1 | 18 | 7 | 7 |
| •block copolymer (MMA-GMA)-EHMA | | | | | | |
| •block copolymer (MA-AA)-BA | | | | | | |
| (block copolymer free of reactive group able to react with epoxy resin) | | | | | | |
| •block copolymer M22N | | | | | | |

(continued)

| | Comparative example 7 | Comparative example 8 | Comparative example 9 | Comparative example 10 | Comparative example 11 | Comparative example 12 |
|---|---|---|---|---|---|---|
| Aromatic amine curing agent ([D]) | | | | | | |
| •3,3'-DAS | 25 | 35 | 30 | 30 | 35 | 35 |
| •Seikacure-S | | | | | | |
| Thermoplastic resin particles insoluble in epoxy resin ([F]) | | | | | | |
| •Toraypearl TN | 20 | 20 | 20 | 20 | 20 | |
| Characteristics of cured resin | | | | | | |
| •bending elastic modulus (MPa) | 3.5 | 3.6 | 4.3 | 3.3 | 4.3 | 4.4 |
| •$K_{IC}$ (MPa•$m^{0.5}$) | 1.3 | 1.0 | 0.9 | 1.2 | 1.1 | 1.2 |
| •glass transition temperature (°C) | 152 | 203 | 190 | 187 | 166 | 180 |
| •heat-molded at 1.5°C/min: phase separation structure size (μm) | 0.05 | 0.06 | 0.03 | 0.07 | 0.15 | 0.04 |
| •heat-molded at 5°C/min: phase separation structure size (μm) | 0.05 | 0.08 | 0.03 | 0.12 | 0.20 | 0.04 |
| •variation in phase separation structure size (%) | 1 | 42 | 2 | 71 | 33 | 2 |
| Characteristics of prepreg and fiber-reinforced composite material | | | | | | |
| •proportion of particles present in 20% depth surface range (%) | 97 | 97 | 96 | 97 | 98 | - |
| •$G_{IC}$ (J/$m^2$) | 450 | 480 | 460 | 500 | 490 | 490 |
| •crack propagating behavior | Δ | × | × | × | Δ | - |

A comparison between the results obtained in Examples 1 to 10 and those in Comparative examples 1 to 12 shows that the cured epoxy resin according to the present invention produced from the epoxy resin composition according to the present invention contains fine phase separation structures that suffer from little variation in the phase separation structure size attributed to molding conditions and have high elastic modulus, high toughness, and high heat resistance. It is also seen that the fiber-reinforced composite material produced from the epoxy resin composition according to the present invention has high mode I interlaminar toughness.

A comparison between the results obtained in Examples 1 to 10 and those in Comparative examples 2 and 3 further shows that if the component [E] is absent, a significant variation in the size of phase separation structures may take place under some molding conditions or the fiber-reinforced composite material may fail to have an adequately high $G_{IC}$ even when the components [A] to [C] coexist in the specified quantities.

A comparison between the results obtained in Examples 1 to 10 and those in Comparative examples 4 to 8 and 11 suggests that if the components [A] to [C] do not exist in the specified quantities, it is difficult for the fiber-reinforced composite material to have both high heat resistance and high $G_{IC}$ simultaneously even when the component [E] is present.

A comparison between the results obtained in Examples 1 to 10 and those in Comparative examples 9 and 10 also suggests that if the component [E] does not exist in the specified quantity, the cured resin cannot have a high elastic modulus and high toughness simultaneously and the fiber-reinforced composite material cannot have an adequately high $G_{IC}$.

Furthermore, a comparison between the results obtained in Examples 1 to 10 and those in Comparative examples 6 and 8 shows that if the component [C] is absent, cracks tend to propagate in the interior of the layers, possibly preventing the fiber-reinforced composite material from having an adequately high $G_{IC}$.

Furthermore, a comparison between the results obtained in Examples 1 to 10 and those in Comparative examples 6 and 8 shows that even if the component [F] is present, cracks tend to propagate in the interior of the layers, possibly preventing the fiber-reinforced composite material from having an adequately high $G_{IC}$, when the components [A] to [C] do not coexist in the specified quantities.

Furthermore, a comparison between the results obtained in Examples 1 to 10 and those in Comparative example 12 shows that even if the components [A] to [C] are present in specified quantities, the fiber-reinforced composite material does not have an adequately high $G_{IC}$ when the component [F] does not coexist in a specified quantity.

[Industrial applicability]

The present invention provides fiber-reinforced composite material having high heat resistance and strength characteristics, and an epoxy resin composition and prepreg that serve for the production thereof. An object of the present invention is to provide an epoxy resin composition that serves to produce fiber-reinforced composite material suffering from little morphology variation under varied molding conditions and at the same time having high mode I interlaminar toughness and moist heat resistance, and also provide prepreg and fiber-reinforced composite material. The fiber-reinforced composite material produced therefrom has improved performance, reduced weight, and increased processability, leading to a higher degree of freedom in selecting component materials and shapes, and contributions are expected to the replacement of metal and other conventional materials with the fiber-reinforced composite material. Their preferred applications in the aerospace industry include, for instance, primary structural members of aircraft such as main wing, tail unit, and floor beam; secondary structural members such as flap, aileron, cowl, fairing, and other interior materials; and structural members of artificial satellites such as rocket motor case. Their preferred applications for general industrial uses include structural members of vehicles such as automobile, ship, and railroad vehicle; and civil engineering and construction materials such as drive shaft, plate spring, windmill blade, various turbines, pressure vessel, flywheel, roller for paper manufacture, roofing material, cable, reinforcing bar, and mending/reinforcing materials. Applications in the sporting goods industry include golf shaft, fishing pole, rackets for tennis, badminton, squash, etc., hockey stick, and skiing pole.

## Claims

1. An epoxy resin composition for fiber-reinforced composite material comprising at least components [A] to [F] as listed below, the components [C] and [E] accounting for 5 to 25 parts by mass and 2 to 15 parts by mass, respectively, relative to the total 100 parts by mass of the epoxy resin contained:

   [A] bifunctional amine type epoxy resin
   [B] tetrafunctional amine type epoxy resin
   [C] bisphenol F type epoxy resin with an epoxy equivalent of 450 to 4,500

[D] aromatic amine curing agent
[E] block copolymer containing a reactive group that can react with epoxy resin
[F] thermoplastic resin particles insoluble in epoxy resin.

**2.** An epoxy resin composition for fiber-reinforced composite material as set forth in claim 1, wherein the reactive group in the block copolymer containing a reactive group that can react with epoxy resin [E] is the carboxyl group.

**3.** An epoxy resin composition for fiber-reinforced composite material as set forth in claim 2, wherein the block copolymer containing a reactive group that can react with epoxy resin [E] is at least one block copolymer selected from the group consisting of copolymers having a structure of S-B-M, B-M, or M-B-M:

wherein, each of the blocks is connected to an adjacent one via a covalent bond, or via an intermediary molecule that is connected to the block via a covalent bond and connected to the adjacent one via another covalent bond; block M comprises a homopolymer of polymethyl methacrylate or a copolymer that contains at least 50 mass% of methyl methacrylate and also contains a reactive monomer as a copolymerization component;
block B is incompatible with block M and has a glass transition temperature of 20°C or less; and block S is incompatible with blocks B and M and has a glass transition temperature that is higher than the glass transition temperature of block B;

wherein glass transition temperature is measured by a method in which a plate-like specimen of 1 $\times$ 2.5 x 34 mm is subjected to DMA while applying periodic traction at 1 Hz in the temperature range of -100 to 250°C, and the value of tan $\delta$ is assumed to represent its glass transition temperature, using the ARES-G2 manufactured by TA instruments.

**4.** An epoxy resin composition for fiber-reinforced composite material as set forth in any one of claims 1 to 3 containing 5 to 35 parts by mass of the bifunctional amine type epoxy resin [A] and 15 to 60 parts by mass of the tetrafunctional amine type epoxy resin [B] relative to the total 100 parts by mass of the epoxy resin in the epoxy resin composition.

**5.** An epoxy resin composition for fiber-reinforced composite material as set forth in any one of claims 1 to 4, wherein the bifunctional amine type epoxy resin [A] has a structure as represented by general formula (1) given below:

[Chemical formula 1]

(1)

wherein, $R^1$ and $R^2$ are at least independently one selected from the group consisting of an aliphatic hydrocarbon group with a carbon number of 1 to 4, alicyclic hydrocarbon group with a carbon number of 3 to 6, aromatic hydrocarbon group with a carbon number of 6 to 10, halogen atom, acyl group, trifluoromethyl group, and nitro group; if a plurality of $R^1$'s or $R^2$'s exist, they may be either identical to or different from each other; n and m are an integer of 0 to 4 and an integer of 0 to 5, respectively; and X represents one selected from the group consisting of -O-, -S-, -CO-, -C(=O)O-, and $-SO_2-$.

**6.** An epoxy resin composition for fiber-reinforced composite material as set forth in any one of claims 1 to 5, wherein the aromatic amine curing agent [D] is diaminodiphenyl sulfone or a derivative or isomer thereof.

**7.** Cured epoxy resin for fiber-reinforced composite material produced by curing an epoxy resin composition for fiber-reinforced composite material as set forth in any one of claims 1 to 6, wherein the phase separation structures comprising the components [A] to [E] are in the size range of 0.01 to 5 μm; wherein the size of the phase separation structures is measured by examination by transmission electron microscopy using the equipment H-7100 transmission electron microscope manufactured by Hitachi, Ltd. at an accelerating voltage of 199 kV and magnification 10000.

**8.** Prepreg produced by impregnating reinforcement fiber with an epoxy resin composition as set forth in any one of claims 1 to 7.

**9.** Prepreg as set forth in claim 8, wherein 90% or more of thermoplastic resin particles insoluble in epoxy resin [F] are localized in a surface region having a depth from the prepreg surface equal to 20% of the prepreg thickness.

**10.** Prepreg as claimed in either claim 8 or 9, wherein the reinforcement fiber is carbon fiber.

**11.** Fiber-reinforced composite material comprising reinforcement fiber and a cured product of an epoxy resin composition for fiber-reinforced composite material as set forth in any one of claims 1 to 7.

**12.** Fiber-reinforced composite material comprising reinforcement fiber and cured epoxy resin as set forth in claim 7.

**13.** Fiber-reinforced composite material produced by curing prepreg as set forth in any one of claims 8 to 10.

**14.** Fiber-reinforced composite material as set forth in any one of claims 11 to 13, wherein the reinforcement fiber is carbon fiber.

## Patentansprüche

**1.** Epoxidharzzusammensetzung für faserverstärktes Verbundmaterial, die zumindest Bestandteile [A] bis [F], wie unten aufgelistet, umfasst, wobei die Bestandteile [C] und [E] 5 bis 25 Masseteile bzw. 2 bis 15 Masseteile, bezogen auf die insgesamt 100 Masseteile des enthaltenen Epoxidharzes, ausmachen:

[A] bifunktionelles Epoxidharz vom Amin-Typ,
[B] tetrafunktionelles Epoxidharz vom Amin-Typ,
[C] Epoxidharz vom Bisphenol-F-Typ mit einem Epoxid-Äquivalent von 450 bis 4500,
[D] aromatisches Amin-Härtungsmittel,
[E] Block-Copolymer, das eine reaktive Gruppe enthält, die mit Epoxidharz reagieren kann,
[F] thermoplastische Harzpartikel, die in Epoxidharz unlöslich sind.

**2.** Epoxidharzzusammensetzung für faserverstärktes Verbundmaterial nach Anspruch 1, worin die reaktive Gruppe in dem Block-Copolymer, das eine reaktive Gruppe enthält, die mit Epoxidharz [E] reagieren kann, die Carboxylgruppe ist.

**3.** Epoxidharzzusammensetzung für faserverstärktes Verbundmaterial nach Anspruch 2, worin das Block-Copolymer, das eine reaktive Gruppe enthält, die mit Epoxidharz [E] reagieren kann, zumindest ein Block-Copolymer ist, das aus der Gruppe bestehend aus Copolymeren mit einer Struktur aus S-B-M, B-M oder M-B-M ausgewählt ist:

worin jeder der Blöcke über eine kovalente Bindung oder über ein Zwischenmolekül, das über eine kovalente Bindung mit dem Block und über eine weitere kovalente Bindung mit dem benachbarten Block verbunden ist, mit dem benachbarten Block verbunden ist; Block M ein Homopolymer von Polymethylmethacrylat oder ein Copolymer umfasst, das zumindest 50 Masse-% Methylmethacrylat und zudem ein reaktives Monomer als einen Copolymerisationsbestandteil enthält; Block B nicht mit Block M kompatibel ist und eine Glastemperatur von 20 °C oder weniger aufweist; und Block S nicht mit den Blöcken B und M kompatibel ist und eine Glastemperatur aufweist, die höher ist als die Glastemperatur von Block B;
worin die Glastemperatur durch ein Verfahren gemessen wird, in dem eine plattenähnliche Probe mit einer Größe von 1 x 2,5 x 34 mm einer DMA unterzogen wird, während im Temperaturbereich von -100 bis 250 °C eine periodische Zugkraft mit 1 Hz darauf angewendet wird, und der Wert von tan$\delta$ wird unter Verwendung des ARES-G2, hergestellt von TA Instruments, so angenommen, dass er dessen Glastemperatur darstellt.

4. Epoxidharzzusammensetzung für faserverstärktes Verbundmaterial nach einem der Ansprüche 1 bis 3, das 5 bis 35 Masseteile des Epoxidharzes vom bifunktionellen Amin-Typ [A] und 15 bis 60 Masseteile des Epoxidharzes vom tetrafunktionellen Amin-Typ [B], bezogen auf die insgesamt 100 Masseteile des Epoxidharzes in der Epoxidharzzusammensetzung, enthält.

5. Epoxidharzzusammensetzung für faserverstärktes Verbundmaterial nach einem der Ansprüche 1 bis 4, worin das Epoxidharz vom bifunktionellen Amin-Typ [A] eine Struktur aufweist, wie von der nachstehend angegebenen allgemeinen Formel (1) dargestellt:

[Chemische Formel 1]

N
R¹n
X
R²m

(1)

worin $R^1$ und $R^2$ jeweils unabhängig zumindest eines sind, das aus der Gruppe bestehend aus einer aliphatischen Kohlenwasserstoffgruppe mit einer Kohlenstoffzahl von 1 bis 4, einer alizyklischen Kohlenwasserstoffgruppe mit einer Kohlenstoffzahl von 3 bis 6, einer aromatischen Kohlenwasserstoffgruppe mit einer Kohlenstoffzahl von 6 bis 10, einem Halogenatom, einer Acylgruppe, einer Trifluormethylgruppe und einer Nitro-Gruppe ausgewählt ist; falls eine Vielzahl von $R^1$ und $R^2$ vorliegt, können diese entweder identisch sein oder sich voneinander unterscheiden; n und m eine ganze Zahl von 0 bis 4 bzw. eine ganze Zahl von 0 bis 5 sind; und X für ein aus der Gruppe bestehend aus -O-, -S-, -CO-, -C(=O)O- und $-SO_2-$ ausgewähltes steht.

6. Epoxidharzzusammensetzung für faserverstärktes Verbundmaterial nach einem der Ansprüche 1 bis 5, worin das aromatische Amin-Härtungsmittel [D] Diaminodiphenylsulfon oder ein Derivat oder Isomer davon ist.

7. Gehärtetes Epoxidharz für faserverstärktes Verbundmaterial, das durch Härten einer Epoxidharzzusammensetzung für faserverstärktes Verbundmaterial nach einem der Ansprüche 1 bis 6 hergestellt wurde, worin die Phasentrennungsstrukturen, die die Bestandteile [A] bis [E] umfassen, im Größenbereich von 0,01 bis 5 μm liegen;
worin die Größe der Phasentrennungsstrukturen durch Untersuchung mittels Transmissionselektronenmikroskopie unter Verwendung der H-7100-Transmissionselektronenmikroskopvorrichtung, hergestellt von Hitachi, Ltd., bei einer Beschleunigungsspannung von 199 kV und einer Vergrößerung von 10.000 gemessen wird.

8. Prepreg, das durch Imprägnieren einer Verstärkungsfaser mit einer Epoxidharzzusammensetzung nach einem der Ansprüche 1 bis 7 hergestellt wird.

9. Prepreg nach Anspruch 8, worin sich 90 % oder mehr der thermoplastischen Harzpartikel, die in Epoxidharz [F] unlöslich sind, in einer Oberflächenregion mit einer Tiefe gleich 20 % der Prepreg-Dicke von der Prepreg-Oberfläche aus befinden.

10. Prepreg nach Anspruch 8 oder 9, worin die Verstärkungsfaser Kohlenstofffaser ist.

11. Faserverstärktes Verbundmaterial, das eine Verstärkungsfaser und ein gehärtetes Produkt aus einer Epoxidharzzusammensetzung für faserverstärktes Verbundmaterial nach einem der Ansprüche 1 bis 7 umfasst.

12. Faserverstärktes Verbundmaterial, das eine Verstärkungsfaser und gehärtetes Epoxidharz nach Anspruch 7 umfasst.

13. Faserverstärktes Verbundmaterial, das durch Härten des Prepregs nach einem der Ansprüche 8 bis 10 hergestellt

wird.

14. Faserverstärktes Verbundmaterial nach einem der Ansprüche 11 bis 13, worin die Verstärkungsfaser Kohlenstofffaser ist.

## Revendications

1. Composition de résine époxy destinée à un matériau composite renforcé par des fibres comprenant au moins les composants [A] à [F] tels qu'indiqués ci-dessous, les composants [C] et [E] représentant de 5 à 25 parties en masse et de 2 à 15 parties en masse, respectivement, par rapport aux 100 parties en masse totales de la résine époxy contenue :

   [A] résine époxy de type amine bifonctionnelle
   [B] résine époxy de type amine tétrafonctionnelle
   [C] résine époxy de type bisphénol F ayant un équivalent époxy de 450 à 4 500
   [D] agent de durcissement d'amine aromatique
   [E] copolymère séquencé contenant un groupe réactif qui peut réagir avec la résine époxy
   [F] particules de résine thermoplastique insolubles dans la résine époxy.

2. Composition de résine époxy destinée à un matériau composite renforcé par des fibres telle que définie dans la revendication 1, dans laquelle le groupe réactif dans le copolymère séquencé contenant un groupe réactif qui peut réagir avec la résine époxy [E] est le groupe carboxyle.

3. Composition de résine époxy destinée à un matériau composite renforcé par des fibres telle que définie dans la revendication 2, dans laquelle le copolymère séquencé contenant un groupe réactif qui peut réagir avec la résine époxy [E] est au moins un copolymère séquencé choisi dans le groupe constitué des copolymères ayant une structure de S-B-M, B-M ou M-B-M :

   dans lequel chacun des blocs est relié à un bloc adjacent par l'intermédiaire d'une liaison covalente, ou par l'intermédiaire d'une molécule intermédiaire qui est reliée au bloc par l'intermédiaire d'une liaison covalente et reliée au bloc adjacent par l'intermédiaire d'une autre liaison covalente ; le bloc M comprend un homopolymère de méthacrylate de polyméthyle ou un copolymère qui contient au moins 50 % en masse de méthacrylate de méthyle et qui contient également un monomère réactif en tant que composant de copolymérisation ; le bloc B est incompatible avec le bloc M et a une température de transition vitreuse inférieure ou égale à 20 °C ; et le bloc S est incompatible avec les blocs B et M et a une température de transition vitreuse qui est supérieure à la température de transition vitreuse du bloc B ;
   la température de transition vitreuse étant mesurée par un procédé dans lequel un échantillon en forme d'assiette de 1 x 2,5 x 34 mm est soumis à une analyse mécanique dynamique (DMA) tout en appliquant une traction périodique à 1 Hz dans la plage de température de -100 à 250 °C, et la valeur de tan $\delta$ est supposée représenter sa température de transition vitreuse, à l'aide de l'ARES-G2 fabriqué par TA instruments.

4. Composition de résine époxy destinée à un matériau composite renforcé par des fibres telle que définie dans l'une quelconque des revendications 1 à 3 contenant de 5 à 35 parties en masse de la résine époxy de type amine bifonctionnelle [A] et de 15 à 60 parties en masse de la résine époxy de type amine tétrafonctionnelle [B] par rapport aux 100 parties en masse totales de la résine époxy dans la composition de résine époxy.

5. Composition de résine époxy destinée à un matériau composite renforcé par des fibres telle que définie dans l'une quelconque des revendications 1 à 4, dans laquelle la résine époxy de type amine bifonctionnelle [A] a une structure telle que représentée par la formule générale (1) donnée ci-dessous :

[Formule chimique 1]

(1)

dans laquelle $R^1$ et $R^2$ représentent au moins indépendamment un groupe choisi dans le groupe constitué d'un groupe hydrocarbure aliphatique ayant un nombre d'atomes de carbone de 1 à 4, d'un groupe hydrocarbure alicyclique ayant un nombre d'atomes de carbone de 3 à 6, d'un groupe hydrocarbure aromatique ayant un nombre d'atomes de carbone de 6 à 10, d'un atome d'halogène, d'un groupe acyle, d'un groupe trifluorométhyle et d'un groupe nitro ; si une pluralité de radicaux $R^1$ ou $R^2$ existent, ils peuvent être soit identiques les uns aux autres soit différents les uns des autres ; n et m représentent un nombre entier de 0 à 4 et un nombre entier de 0 à 5, respectivement ; et X représente un groupe choisi dans le groupe constitué des groupes -0-, -S-, -CO-, -C(=0)0- et $-SO_2-$.

6. Composition de résine époxy destinée à un matériau composite renforcé par des fibres telle que définie dans l'une quelconque des revendications 1 à 5, dans laquelle l'agent de durcissement d'amine aromatique [D] est une diaminodiphényl-sulfone ou un dérivé ou un isomère de celle-ci.

7. Résine époxy durcie destinée à un matériau composite renforcé par des fibres produite en durcissant une composition de résine époxy destinée à un matériau composite renforcé par des fibres telle que définie dans l'une quelconque des revendications 1 à 6, dans laquelle les structures à séparation de phase comprenant les composants [A] à [E] sont dans la plage granulométrique de 0,01 à 5 $\mu$m ;
dans laquelle la taille des structures à séparation de phase est mesurée par examen par microscopie électronique à transmission à l'aide du microscope électronique à transmission H-7100 fabriqué par Hitachi, Ltd. à une tension d'accélération de 199 kV et à un grossissement de 10 000.

8. Préimprégné produit en imprégnant un renfort fibreux avec une composition de résine époxy telle que définie dans l'une quelconque des revendications 1 à 7.

9. Préimprégné tel que défini dans la revendication 8, dans lequel 90 % ou plus des particules de résine thermoplastique insolubles dans la résine époxy [F] sont localisés dans une région superficielle ayant une profondeur à partir de la surface du préimprégné égale à 20 % de l'épaisseur du préimprégné.

10. Préimprégné tel que revendiqué dans la revendication 8 ou 9, dans lequel le renfort fibreux est une fibre de carbone.

11. Matériau composite renforcé par des fibres comprenant un renfort fibreux et un produit durci d'une composition de résine époxy destinée à un matériau composite renforcé par des fibres telle que définie dans l'une quelconque des revendications 1 à 7.

12. Matériau composite renforcé par des fibres comprenant un renfort fibreux et une résine époxy durcie telle que définie dans la revendication 7.

13. Matériau composite renforcé par des fibres produit en durcissant un préimprégné tel que défini dans l'une quelconque des revendications 8 à 10.

14. Matériau composite renforcé par des fibres tel que défini dans l'une quelconque des revendications 11 à 13, dans lequel le renfort fibreux est une fibre de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5028478 A
- WO 2008143044 A
- WO 2010035859 A
- EP 524054 A
- EP 749987 A
- JP H0126651 A
- JP S63170427 A
- JP S63170428 A


### Non-patent literature cited in the description


- **R. B. GRUBBS ; J. M. DEAN ; F. S. BATES.** Methacrylate Block Copolymers through Metal-Mediated Living Free-Radical Polymerization for Modification of Termosetting Epoxy. *Macromolecules,* 2001, vol. 34, 8, , 593